(19) Europäisches Patentamt
European Patent Office
Office européen des brevets

(11) Publication number: 0 002 801
B1

(12) EUROPEAN PATENT SPECIFICATION

(45) Date of publication of patent specification: 27.06.84

(51) Int. Cl.³: C 09 D 3/81, C 08 L 51/00, C 08 F 265/00

(21) Application number: 78101793.4

(22) Date of filing: 20.12.78

# (54) Coating, impregnating and adhesive compositions, their preparation and use.

(30) Priority: 29.12.77 US 865568
01.12.78 US 965673

(43) Date of publication of application:
11.07.79 Bulletin 79/14

(45) Publication of the grant of the patent:
27.06.84 Bulletin 84/26

(84) Designated Contracting States:
BE DE FR GB IT NL

(56) References cited:
FR - A - 2 279 546
FR - A - 2 284 654

(73) Proprietor: Rohm and Haas Company
Independence Mall West
Philadelphia, Pennsylvania 19105 (US)

(72) Inventor: Emmons, William David
1411 Holcomb Road
Huntingdon Valley Pa. 19006 (US)
Inventor: Feely, Wayne Edmund
1172 Lindsay Lane
Rydal Pa. 19046 (US)

(74) Representative: Deufel, Paul, Dr. et al,
Patentanwälte Müller-Boré, Deufel, Schön, Hertel
Lewald, Otto Isartorplatz 6 Postfach 26 02 47
D-8000 München 26 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 002 801 B1

Courier Press, Leamington Spa, England.

## Description

This invention is concerned with a coating and/or impregnation in the form of a protective and/or decorative film, a binder for fibrous webs forming a bonded non-woven fabric, or an adhesive comprising amine-containing polymers and a material containing two or more acryloxy or methacryloxy groups. The amine polymer may have its reactivity with the poly(meth)acryloxy material subdued by including a volatile ketone or aldehyde in the composition or by pre-reacting such a ketone or aldehyde with the amine groups to form ketimine or aldimine groups in the polymer.

U.S. Patent No. 2,759,913 discloses the polymerization of organic compounds containing at least two ethylenic double bonds having in the $\alpha$-position to each double bond a carbonyl group of an aldehyde, ketone, acid, ester or amide group with a compound containing at least two active hydrogen atoms such as an amino group as is present, for example, in ethylene diamine or piperazine, or a hydroxyl group as is present, for example, in ethylene glycol or Bisphenol A.

U.S. Patent No. 3,845,056 discloses the production of amine acrylates by reaction of a diacrylate ester such as the diacrylate ester of diethylene glycol with an organic amine such as piperazine followed by radiation cure to give coatings.

U.S. Patents Nos. 3,876,518, 3,878,077 and 4,016,059 disclose radiation curable compositions comprising urethane derivatives of acrylated epoxidized soybean or linseed oils which have been particularly pre-reacted with aliphatic secondary amines and the use of these compositions to produce coatings and inks.

U.S. Patent No. 4,058,657 discloses curable composition comprising a liquid amine-terminated polymer and a vinylidene-terminated polymer. The amine is preferably heterocyclic and contains at least two primary or secondary amino groups. The vinylidene polymers may be prepared by reacting either polymer containing terminal functional groups with a compound containing oxirane and vinylidene groups or polymer containing terminal epoxy groups with (meth)acrylic acid.

U.S. Patents Nos. 3,925,181, 4,037,018 and 4,096,105 disclose coating compositions in aqueous dispersions for producing curable films on a substrate. The compositions of the first two mentioned patents comprise (1) a polymer having at least 5% by weight of pendant primary and/or secondary amine groups which are protonated with acid to render the polymer water dispersible and (2) at least 5% by weight of said polymer of bismaleamide and in the case of U.S. Patent 4,096,105 an $\alpha,\beta$-ethylenically unsaturated carbonyl crosslinking agent having at least two $\alpha,\beta$-ethylenically unsaturated carbonyl groups such as ethylene glycol di(meth)acrylate or N,N-methylene bis acrylamide crosslinker.

We have now found certain compositions which may provide durable coatings having excellent mechanical and resistance properties even on ambient curing. The curing may be accelerated, if desired, by heating.

According to the invention there is provided a coating and/or impregnation in the form of a protective and/or decorative film, a binder for fibrous webs forming a bonded non-woven fabric, or an adhesive, characteristised in that said coating and/or impregnation is formed from a composition comprising:

(1) at least one vinyl addition polymer containing a plurality of primary or secondary amine groups, or aldimine or ketimine groups, pendant to units in the polymer chain

(2) at least one material containing at least two acryloxy or methacryloxy groups of the formula:

$$H_2C=C(R)C(O)—O—$$

where R is H or $CH_3$

(3) optionally, at least one volatile ketone or aldehyde stabiliser containing from 3 to 10 carbon atoms; and

(4) optionally, at least one monethylenically unsaturated compound of the formula

$$H_2C=C(R)X$$

where X is H or $CH_3$ and X is an electron withdrawing group.

The ester groups of formula I are herein designated acryloxy or methacryloxy groups depending on whether R is H or $CH_3$. The term (meth)acryloxy is intended herein to be generic and to embrace either or both of the specific groups. While both groups or moieties of formula I are amenable to ambient cure, it has been found that the specific acryloxy group favours cure at lower ambient temperature and for that reason the component 2) above is preferably a compound containing at least two acryloxy groups.

Component (1) above may be referred to herein as an imine-containing polymer for simplicity, but it is to be understood that this is intended to embrace component (1) polymers containing imine groups, i.e. aldimine and ketimine groups, or the salts of the amine or imine groups with acids, except where the context is clearly and completely inconsistent with such broader construction. Component (1) is a vinyl addition polymer which is preferably uncrosslinked and linear (the term "linear" being

construed to include branched as well as straight chain linkages), or a mixture of such polymers, which may have an average molecular weight from as low as about 600 number average ($\overline{M}_n$) to several hundred thousand number average ($\overline{M}_n$), e.g. 300,000 or higher. For many purposes, the amine-containing polymer is preferably one having a low molecular weight (e.g. up to 15,000 $\overline{M}_n$) and in some cases having sufficient hydrophilic groups, e.g. —$NH_2$, —NHR (R being lower alkyl), —OH, —COOH, or depending on pH the carboxyl may be in the form of amine, alkali metal, or ammonium salts, e.g. —$COONH_4$, to render this component water-dispersible or even water-soluble. On the other hand, the amine-containing polymers may be of intermediate to moderately higher molecular weight, e.g. 30,000 to 300,000 number average and range in soluble nature from water-soluble to organic solvent soluble. The composition used to form the coatings and/or impregnations of the invention may also comprise a vehicle and it is desirable that the polymer be soluble therein.

The addition polymers constituting component 1) may be made by direct vinyl addition polymerization of a monoethylenically unsaturated monomer containing an amine precursor group if suitable conditions are maintained during the polymerization. Thus, acid salts of the amine-group containing monomer, such as aminoethyl (meth)acrylate hydrochloride, may be polymerized, or the "blocked amine" monomers of ketimine or aldimine types disclosed in U.S. Patents 3,037,969 and 3,497,485 may be polymerized to produce the component 1).

Alternatively, a component 1) polymer may be made by making an addition polymer of one or more (meth)acrylic esters, having the molecular weight desired and subjecting the ester polymer to aminolysis (amidation) by means of a polyamine, especially an aliphatic polyamine, having at least two amine groups, at least two of such amine groups being primary or secondary. Primary amines in the amidation products may be converted to imine groups by reaction with ketone or aldehyde.

In those embodiments wherein component 1) is of low molecular weight, e.g. 600 to 15,000, preferably 600 to 1000 more preferably 1000 to 5000, number average ($\overline{M}_n$), low molecular weight polymers containing (meth)acrylic acid esters, or such polymers also containing polymerized units of other monoethylenically monomers, especially those selected from ($C_2$ to $C_{20}$)alpha-olefins, e.g. ethylene, propylene, and propylene-trimer, styrene, vinyltoluene, acrylic acid, methacrylic acid, and (meth)acrylonitrile may first be prepared and the polymer of (meth)acrylate ester units may then be reacted with a polyamine, such as ethylenediamine or diethylenetriamine, to convert ester units into amino-amide units.

Thus, component 1) may be derived from the aminolysis product of a lower (C1—C4) alkyl (meth)acrylate polymer, e.g. having a number average ($\overline{M}_n$) molecular weight of 600 to 15,000 preferably of a methyl acrylate (MA) copolymer in which the molar proportion of MA is from 2 to 35% and the comonomer(s) making up the balance of the copolymer may be composed of mers (polymerized units) of one or more monoethylenically unsaturated monomeric compounds having a group $H_2C{=}C{<}$, such as methyl methacrylate, ethyl acrylate or methacrylate, a ($C_3$—$C_{18}$)alkyl (meth)-acrylate, e.g. butyl acrylate or methacrylate, hexyl acrylate or methacrylate, 2-ethylhexyl acrylate or methacrylate, styrene, vinyltoluene, ethylene (or other $\alpha$-olefin), acrylonitrile, hydroxyethyl acrylate or methacrylate, and, in limited amounts, acrylic acid or methacrylic acid.

The proportion of methyl acrylate, since it is the (meth)acrylate most susceptible to aminolysis may be, and is preferably, predetermined to provide sufficient ester mer units in the polymer available for aminolysis, to assure that the desired amount of amino groups are introduced by the aminolysis procedure. The other monomers may be selected on the basis of their contributions of hydrophobicity, flexibility, hardness, durability to weathering, e.g. ultraviolet light stability, resistance to water and other solvents, such as gasoline. If desired, ethyl acrylate or even a higher alkyl acrylate may be used as the aminolysis-susceptible component of the starting polymer-alternatively methyl methacrylate or higher methacrylate may be so used.

The polyamine used for the aminolysis should contain at least two primary or secondary amine groups and the nitrogen atoms should be attached to aliphatic carbon atoms rather than aromatic carbon atoms. Representative polyamines useful for the aminolysis are:

ethylenediamine (EDA)
diethylenetriamine (DETA)
trimethylenediamine
triethylenetetramine (TETA)
pentamethylenediamine
tetraethylenepentamine (TEPA)
hexamethylenediamine
menthanediamine
4,4'-methylenebis (cyclohexylamine)
bis(aminomethyl)-cyclohexane
piperazine
N-aminoethylpiperazine
tris-(aminoethyl)amine
propylenediamine (PDA)

dipropylenetriamine (DPTA)
tripropylenetetramine (TPTA)
1,3-butylenediamine
1,4-butylenediamine
N-(aminoethyl)-ethanolamine

A preferred class of polyamines in respect to availability, effectiveness and economy are those of the formula

$$H_2N—R^o—(\overset{H}{\overset{|}{N}}R^o)_n—NH_2 \qquad \text{(III)}$$

wherein $R^o$ is an alkylene group having 2 or 3 carbon atoms and n is 0, 1, 2 or 3. Of this class, ethylenediamine generally provides optimum results, but 1,3-propylene diamine is also preferred.

Thus, component 1) may be derived from a vinyl addition polymer, especially a copolymer, having a molecular weight up to several hundred thousand viscosity average, preferably of lower molecular weight in the range of number average molecular weight ($\bar{M}_n$) from about 600 to 15,000, even up to 20,000, and containing from 2 to 95, preferably from 2 to 35, mole percent of (meth)acrylamide mers or units in which the amide nitrogen atom is substituted by an aliphatic hydrocarbon group carrying one or more primary or secondary amino groups, the hydrogen atoms of such amino group being available for reaction with (meth)acryloxy groups of monomeric or polymeric compounds of polyfunctional character in respect to their content of (meth)acryloxy groups of formula I above.

These amino-amide units, if a polyamine of the preferred class of polyamine reactants set out under formula III above is used, may have the general formula

$$—CH_2—\overset{R}{\overset{|}{C}})— \qquad \text{(IV)}$$
$$O=C—NH—R^o—(\overset{H}{N}R^o)_n—NH_2$$

and in the specific instance wherein ethylenediamine is the reactant used and the ester units in the polymer that are aminolyzed are alkyl (meth)acrylate units, the amino-amide units in the aminolyzed polymer have the specific structure of the formula

$$—(H_2C—CR)—$$
$$O=C—NHCH_2CH_2NH_2 \qquad \text{(IVA)}$$

where R is H or $CH_3$.

As part of all of all of the component 1) polymer, there may be used, as stated hereinabove, a vinyl addition polymer or copolymer containing aldimine or ketimine groups obtained by polymerization of the monomeric (meth)acryloxyalkyl ketimines or aldimines of formulas I, II and III of U.S. Patent 3,037,969 or the (meth)acryloxyalkyloxyalkyl ketimines or aldimines of formula I, U.S. Patent 3,497,485, and the disclosure of these two patents is incorporated herein by reference.

Thus, polymer (i) may contain units of monomer having at least one of the following formulae:

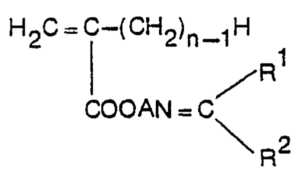

(V)

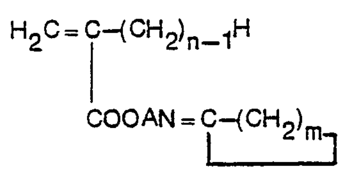

(VI)

and

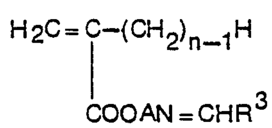

(VII)

where

m is an integer having a value of 4 to 5,
n is 1 or 2,
A is a $C_2$—$C_{12}$ alkylene group,
$R^1$ is a ($C_1$—$C_{12}$) alkyl or a cycloalkyl group,
$R^2$ is a ($C_1$—$C_{12}$) alkyl or a cycloalkyl group, and
$R^3$ is phenyl, halophenyl or alkyloxyphenyl in which the alkoxy group has one to four carbon atoms; and

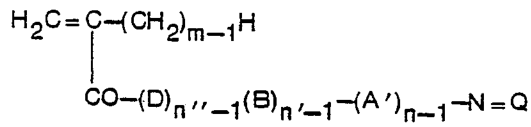

(VIII)

wherein:

Q is

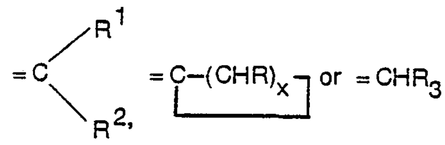

R is H or it may be methyl in one CHR unit,
$R^1$ is ($C_1$—$C_{12}$) alkyl or cyclohexyl,
$R^2$ is ($C_1$—$C_{12}$) alkyl or cyclohexyl,
$R^3$ is phenyl, halophenyl, ($C_1$—$C_{12}$) alkyl, cyclohexyl or ($C_1$—$C_4$) alkoxyphenyl,
A′ B, and D are the same or different oxyalkylene groups having the formula

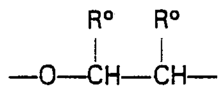

each R being the same or different and H or alkyl having 1 or 2 carbon atoms,
m is 1 or 2,
x is an integer having a value of 4 to 5,
n is an integer having a value of 1 to 200,
n′ is an integer having a value of 1 to 200, and
n″ is an integer having a value of 1 to 200, the sum of n—1, n′—1, and n″—1 having a value of 2 to 200.

Preferred compounds are those of the Formula (VIII) in which the sum of n—1, n′—1, and n″—1 have a value of 2 to 10.

These imine-containing polymers are in effect, polymers containing blocked primary amine groups. Hence, they provide longer pot-life times since their operation depends on liberation and evaporation of the aldehyde or ketone from the imine nitrogen. Both of these patents disclose the mixing of copolymers containing 5 to 25% by weight of an aldimine or ketimine with polyepoxides to produce insoluble and infusible cross-linked coatings. They do not, however, disclose or suggest the cold-curing reaction of the present invention which requires that component 2) used herein contains a polyfunctional unsaturated compound having at least two (meth)acryloxy groups of formula I. The resulting products are quite distinct.

Component 2) of the compositions of the present invention for coating, impregnating, and adhesive purposes consists essentially of one or more polyfunctional compounds of monomeric or polymeric (condensation, addition, or vinyl addition types) character containing two or more unsaturated (meth)acryloxy groups of formula I hereinabove. Of these, the specific acryloxy groups are preferred. It has been found that the primary amine groups developed from imine groups in component 1) undergo, even at ambient temperature, addition across the double bond of the (meth)acryloxy units of component 2). The concurrent addition reaction of an amino group of each of several molecules of component 1) to (meth)acryloxy units of a polyfunctional component 2) compound serves to crosslink component 1) and thereby to cure the composition containing both components.

By the term "polyfunctional (meth)acrylate", it is intended herein to refer to compounds containing two or more unsaturated (meth)acryloxy groups. Examples of such compounds that are useful as part of all of component 2) are:

ethylene glycol diacrylate
diethylene glycol diacrylate
propylene glycol diacrylate

trimethylene glycol diacrylate
neopentyl glycol diacrylate
1,3-butylene glycol diacrylate
1,4-butylene glycol diacrylate
1,6-hexamethylene glycol diacrylate
1,10-decamethylene glycol diacrylate
trimethylolpropane triacrylate
pentaerythritol tetraacrylate, and
pentaerythritol triacrylate.

There may also be used more complex types of polyfunctional (meth)acrylates obtained by reaction of a (meth)acryloxy-containing compound, such as (meth)acrylic acid, (meth)acrylyl halide,or a (meth)acrylic acid ester, with various compounds, such as hydroxy-containing alkyd resins, polyester condensates, or polyether condensates. These complex acrylated products may in some instances be termed "polymeric", since the (meth)acryloxy groups may be joined to a condensation polymer, e.g. a polyester or a polyurethane, to an addition polymer, e.g., a polyether, or to a vinyl addition polymer, e.g. a glycidyl acrylate polymer.

Examples include:

(A) Urethane (meth)acrylates obtained by reacting isocyanate groups of a polyisocyanate, such as hexamethylene diisocyanate with a hydroxyalkyl (meth)acrylate, e.g. hydroxyethyl acrylate. These polyurethane poly(meth)acrylate monomers are disclosed in U.S. Patent 3,297,745:

The monomers are prepared by reacting an organic diisocyanate such as toluene diisocyanate

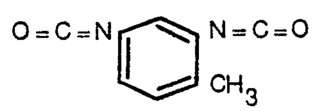

with an ethylenically unsaturated alcohol having the empirical formula

$$\begin{array}{c} R_1 \\ | \\ R_2CH{=}CAOH \end{array}$$

wherein:

$R_1$ is selected from the class consisting of —H and —$CH_3$;
$R_2$ is selected from the class consisting of —H; —$CH_3$; and —$C_6H_5$; and
A is a divalent organic radical selected from the class consisting of

$$\begin{array}{l} —COCH_2CH—; \\ \ \ \ \| \qquad\ \ | \\ \ \ \ O \qquad R_3 \end{array} \quad \text{and} \quad \begin{array}{l} —CH_2OCH_2CH; \\ \qquad\qquad\quad\ | \\ \qquad\qquad\quad R_3 \end{array}$$

wherein $R_3$ is selected from the class consisting of

$$—H; \quad —(CH_2)_nCH_3; \quad —CH_2Cl;$$

$$\begin{array}{l} —CH_2OCR_4; \\ \qquad\quad\ \| \\ \qquad\quad\ O \end{array}$$

$$\begin{array}{l} —CH_2OCC{=}CHR_2; \\ \qquad\quad\ \| \ | \\ \qquad\quad\ O\ R_1 \end{array}$$

$$—CH_2OR_4— \quad \text{and} \quad —CH_2OCH_2CH{=}CHR_2$$

wherein:

n is an integer from zero to ten; and

$R_4$ is selected from the class consisting of phenyl and halogenated phenyl radicals, alkyl and halogenated alkyl radicals having from one to two carbon atoms, benzoxy, phenoxy and halogenated benzoxy and phenoxy radicals.

For each mol of the diisocyanate, two mols of the ethylenically unsaturated alcohol are utilized.

The reactants are mixed and heated to a temperature about ambient room temperature, preferably below about 200°C. Usually the exothermic heat of reaction will be sufficient to complete the reaction. Where the reactants are solids, a suitable inert solvent may be employed such as benzene, toluene, xylene. The reactants are maintained at a reaction temperature until substantial completion of the reaction is indicated by a reduction of the —N=C=O content to substantially zero.

The resulting monomer contains two urethane linkages and at least two ethylenically unsaturated carbon-to-carbon linkages:

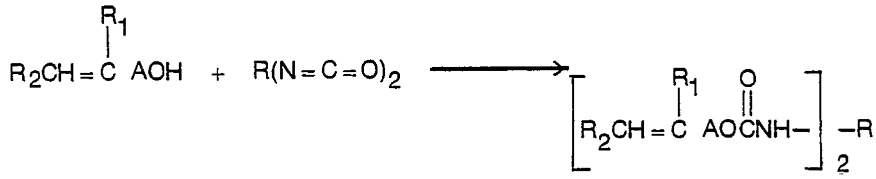

wherein R is a divalent organic radical. In the preferred monomers, the ethylencially unsaturated linkages are terminal groups

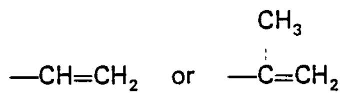

yielding divinyl monomers, i.e., the $R_2$ radical is hydrogen. Where the ethylenically unsaturated alcohol contains two ethylenically unsaturated carbon-to-carbon linkages, the resulting monomer will contain four ethylenically unsaturated linkages.

B) Polyether (meth)acrylates obtained by esterification of hydroxy-terminated polyethers with acrylic or methacrylic acid as disclosed in U.S. Patent 3,380,831:

Branched chain polyol polyether polyesters of alpha-methylene carboxylic acids of 3—4 carbons contain the three radicals represented by the formula

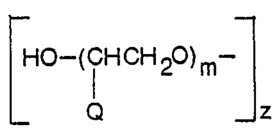

$C_xH_{(2x+2-y-z)}$

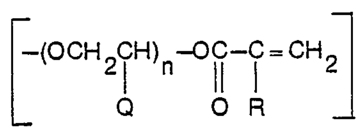

free hydroxyl chain end

polyhydric alcohol carbon skeleton

alkylene oxide chain extender

addition polymerizable ester chain end

wherein:

Q is H, $CH_3$ or $C_2H_5$;
R is H or $CH_3$;
x is 3, 4, 5 or 6 and is equal to or greater than y+z,
y is 2, 3, 4, 5 or 6,
z is 0, 1, 2, 3 or 4 and y+z is greater than 2,
m is 0, 1 or more, and
n is 1 or more.

The polyhydric alcohol skeleton may be drived from such compounds as trimethylolpropane, glycerol, the penitols, e.g., pentaerythritol; and the hexitols, e.g., d-mannitol and d-sorbitol. Other polyfunctional compounds capable of reaction with alkylene oxides may be used. Ethylene oxide and propylene oxide may be used as chain extenders and also as chain terminators containing free hydroxyl groups. Acrylic acid and methacrylic acid are suitable alpha-methylene carboxylic acids for providing addition polymerizable ester chain ends.

(C) Polyesters having at least two (meth)acrylate groups obtained by esterifying hydroxyl groups with (meth)acrylic acid as disclosed in U.S. Patent 3,935,173:

Oligo(meth)acrylates having a (meth)acroyl group equivalent of not more than 1000 and being prepared by esterifying (1) a polyhydric alcohol, (2) a polycarboxylic compound selected from the group consisting of a polycarboxylic acid and the anhydride thereof, said polyhydric alcohol and polycarboxylic compound not being a dihydric alcohol and dicarboxylic compound respectively at the same time, and (3) (meth)acrylic acid to produce the oligo(meth)acrylate and polyol poly(meth)acrylates prepared by esterifying a polyhydric alcohol and (meth)acrylic acid to produce the polyol poly(meth)acrylate.

D) Polyfunctional (meth)acrylates disclosed in U.S. Patent 3,560,237, e.g. obtained by reaction of a hydroxyalkyl (meth)acrylate, e.g. hydroxyethyl acrylate, with any one of:

a) Dicarboxylic acids having from 4 to 15 carbon atoms,

b) Polyepoxides having terminal glycidyl groups,

c) Polyisocyanates having terminal reactive isocyanate groups:

Vinyl ester resins made by reacting:

(1) A polyfunctional material selected from the group consisting of (a) dicarboxylic acids having from 4 to 15 carbon atoms, (b) polyepoxides having terminal, reactive glycidyl groups or (c) polyfunctional isocyanates having terminal, reactive isocyanate groups, with

(2) 2-hydroxylalkyl acrylates or methacrylates.

E) (Meth)acrylate-terminated polyesters made from (meth)acrylic acid, a polyol having at least three hydroxyl groups, and a dicarboxylic acid (U.S. Patent 3,567,494):

Polymerizable ester prepared by the co-condensation of acrylic acid and a dicarboxylic acid selected from alpha-unsaturated, alpha, beta-dicarboxylic acids having 4 to 5 carbon atoms, and saturated aliphatic dicarboxylic acids having 3 to 12 carbon atoms with a polyhydric alcohol having at least 3 esterifiable hydroxyl groups on adjacent carbon atoms, 45% to 95% of the hydroxyl groups being esterified with the acrylic acid, and 5% to 55% of the hydroxyl groups being esterified with the dicarboxylic acid.

F) Poly(meth)acrylates obtained by the reaction of (meth)acrylic acid with at least two epoxy groups of epoxidized drying oils, such as soybean oil, linseed oil, and the like, e.g. epoxidized corresponding drying oil fatty acid, an ester or amide thereof, or the corresponding alcohol, containing at least 2 epoxy groups. Such polyfunctional (meth)acrylates are disclosed in U.S. Patent 3,125,592:

Polymerizable vinylated monomer which comprises reacting an epoxidized ester of an alcohol and a higher aliphatic carboxylic acid with a vinyl aliphatic monocarboxylic acid of the formula

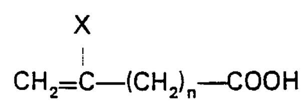

wherein n is O and X is methyl

in the presence of phenolic free radical inhibitor and of gaseous oxygen, said inhibitor and oxygen cooperating to inhibit vinyl polymerization, said higher aliphatic carboxylic acid having a chain of 10—24 carbon atoms, whereby said epoxidized ester is acylated with the carboxyl group of said vinyl acid at an oxirane segment

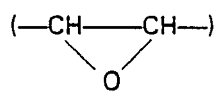

Preparation of the vinylated long chain compounds is typified by the reaction of one mol of acrylic acid with one mol of the 2-ethylhexyl ester of 9,10-epoxystearic acid according to the following equation:

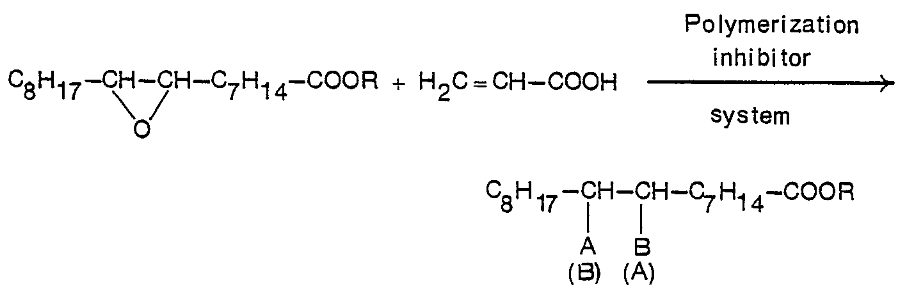


where A is hydroxy, B is acryloxy, and R is 2-ethylhexyl. A mixture of the 2-ethylhexyl esters of 9-acryloxy-10-hydroxystearic acid and 9-hydroxy-10-acryloxystearic acid is obtained because the carbon-oxygen bonds in the oxirane ring are opened singly and randomly by the carboxyl group of the acrylic acid.

G) Poly(meth)acrylates which are urethane or amine derivatives of the poly(meth)acrylated epoxidized drying oils, farry acids and the like described in F) and U.S. patent mentioned therein, obtained by the reaction of isocyanate(s) or amine(s) respectively with the poly(meth)acrylated epoxidized drying oils, fatty acids, and the line described in U.S. Patent 3,125,592. The urethane and amine derivatives retain some or all of the (meth)acrylate groups and are disclosed in U.S. patents 3,876,518 and 3,878,077:

In the reaction of the acrylated epoxidized soybean oil compound with an amine compound, the amine compound is preferably a secondary amine of the formula $R_2'NH$, wherein each R′ can be substituted or unsubstituted alkyl having from 1 to about 15 carbon atoms, or an aryl group having up to 15 carbon atoms, (or an aryl group having up to 15 carbons,) or the $R_2'$ unit together with the nitrogen atom of the NH group forms a ring structure having 5 or 6 ring atoms. Illustrative thereof one can mention dimethylamine, diethylamine, dibutylamine, dioctylamine, di-2-ethylhexylamine, diphenylamine, N-methyl-N-phenylamine, morpholine, piperidine, pyrrolidine, and the like. In this reaction the amine compound adds across the double bond of the acrylyl unit of the acrylated epoxidized soybean oil compound to produce a compound containing the group

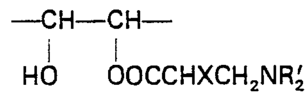

wherein X is hydrogen or methyl.

The urethane derivatives of the acrylated epoxidized soybean oil and the amine derivatives of the acrylated epoxidized soybean oil are preferred.

Thus, the urethane derivatives of the acrylated epoxidized soybean oil contain the group

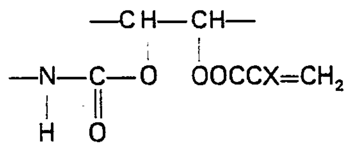

wherein X has the above meaning.

H) Poly(meth)acrylates obtained by reaction of (meth)acrylic acid by addition to the epoxy groups of aromatic bisphenol-based epoxy resins as disclosed in U.S. Patent 3,373,075:

The formula

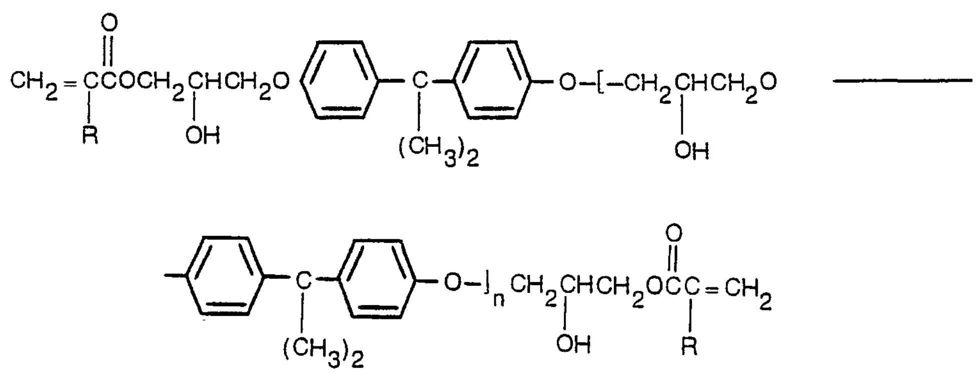

wherein R is a substituent selected from the class consisting of hydrogen, methyl and ethyl radicals and n is an integer from zero to twenty, represents diacrylates which are preferably prepared by reaction of a diglycidyl ether or polyglycidyl ethers of Bisphenol A with two mols of a carboxylic acid selected from the class consisting of acrylic, methacrylic and ethacrylic acids.

I- Poly(meth)acrylates obtained by the addition of (meth)acrylic acid to a linear vinyl polymer having pendant glycidyl groups, e.g. polymers of glycidyl (meth)acrylate or of vinyl glycidyl ether or vinyl glycidyl sulfide as disclosed in U.S. Patent 3,530,100:

The polymers disclosed in this patent have a plurality of repeating units of the formula

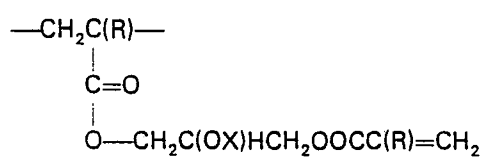

wherein

R is hydrogen, methyl, chloro or cyano and

X is hydrogen, an acyl radical or a urethane radical.

J) Polyfunctional (meth)acrylates derived from (meth)acrylic acid anhydride and polyepoxides as disclosed in U.S. Patent 3,676,398:

The reaction product of a polyepoxide containing at least two epoxy groups,

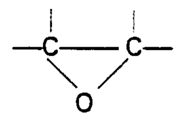

in its structure with an acryloyl carboxylic acid anhydride of the formula

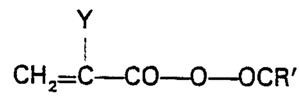

The reaction of the epoxy groups in the polyepoxides with these anhydrides yields the diester derivatives,

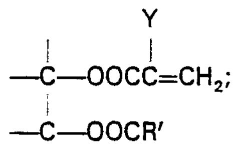 (A)

Accordingly, the monomeric reaction product contains at least two groups represented by structure (A), in which Y represents H, $CH_3$, Cl, Br, and CN; R′ represents H, a group which is essentially hydrocarbon containing one to 20 carbon atoms, and a halogenated derivative of the said hydrocarbon group.

K) Polyfunctional (meth)acrylate urethane esters obtained from the combining of hydroxyalkyl (meth)acrylates, a diisocyanate, and a hydroxyl functional alkyd condensate as disclosed in U.S. Patent 3,673,140:

The reaction product of

1. an alkyd formed from trimethylol propane, tall oil fatty acid, and adipic acid with
2. the reaction product of toluene diisocyanate and the monoacrylic acid ester of ethylene glycol.

L) (Meth)acrylate terminated urethane polyesters obtained by reaction of a polycaprolactone diol or triol with an organic polyisocyanate, e.g. a diisocyanate, and a hydroxyalkyl (meth)acrylate. Such products are disclosed in U.S. Patent 3,700,643:

Unsaturated acrylate-capped polycaprolactone polyol derivatives are produced having terminal acrylyl groups and at least one polycaprolactone polyol chain residue in the molecule. In one of its simplest forms the final product can be the reaction product of a polycaprolactone diol, an organic isocyanate and hydroxyethyl acrylate.

M) Urethane poly(meth)acrylates obtained by reaction of a hydroxyl-containing ester of a polyol with (meth)acrylic acid and a polyisocyanate, such as those described in U.S. Patent 3,759,809:

The product of the reaction of (a) a polyfunctional polyethylenically unsaturated monomeric ester having free hydroxyl groups and formed by the reaction of an ethylenically unsaturated acid and a polyhydric alcohol with (b) an organic isocyanate, the isocyanate-modified ester product having a hydroxyl number of about 15 to 70.

N) A simple ester obtained by the reaction of a polyol having at least two hydroxyl groups with acrylic acid or methacrylic acid, preferably trimethylolpropane triacrylate or a poly(200)ethylene glycol dimethacrylate.

The disclosures in the patents mentioned above in each of paragraphs A) through M) are incorporated herein by reference insofar as they disclose the poly(meth)acryloxy-containing compounds and the processes of making them.

Preferred polyfunctional unsaturated compounds of the "complex" type above for use in component 2) are the acrylic acid adducts to polyepoxides in which the epoxy group is attached to adjacent carbon atoms, that is the epoxy groups in a vic-epoxy group. The polyepoxide may be any epoxidized vegetable or animal oil having ten or more carbon atoms in the fatty acid component and sufficient unsaturation to provide at least two epoxy groups in the epoxidized oil. Drying oils or semi-drying oils such as linseed oil soybean oil are especially useful for epoxidation and subsequent acrylation. The polyepoxide to be acrylated may be any resin-forming polyepoxide having at least two terminal groups of the formula,

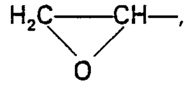

obtainable by reacting epichlorohydrin and a polyhydroxy phenol or an aliphatic diol or polyol, e.g. Bisphenol A, glycerol, glycol, diethylene glycol, hexamethylene glycol and the like. Low molecular weight vinyl addition copolymers of glycidyl vinyl ether and of glycidyl (meth)acrylate may also be acrylated to form acrylated polyepoxides of component 2).

The relative proportions of components 1) and 2) may fall within a wide range depending upon the particular composition of each of the components. In general, the amount of unsaturated poly(meth)acrylate or poly(meth)acryloxy compound (component 2)) that is used is sufficient to react with primary or secondary amine groups of component 1) to result in crosslinking upon ambient or elevated-temperature cure to whatever extent is desired or needed to obtain the balance or combination of mechanical and resistance properties. The ratios of component 2) to component 1) advantageously may fall in the range of 0.5 to 3.5 equivalents of unsaturated (meth)acryloxy groups in component 2) per equivalent of amine nitrogen (primary and secondary total) in component 1). Preferably they are present in proportions providing 1.5 to 2 (meth)acrylate unsaturation equivalents of component 2) for each equivalent of reactive hydrogen-containing amine in component 1).

Besides a content of primary and/or secondary amine groups and/or imine groups in component 1) there may also be other hydrophilic groups or linkages depending on the composition of the copolymer and the polyamine used in aminolysis and the procedure used in aminolysis. Thus the initial copolymer may contain hydroxyl or carboxyl groups (for optimum results, the equivalents of amine nitrogen in the copolymer should exceed the equivalents of carboxyl, if any, therein), the polyamine may contain two primary amine groups, one of which on aminolysis converts the acrylic ester linkage to an acrylic amide linkage in which the amide nitrogen carries one unsubstituted hydrogen and an amino-containing substituent which may contain not only a terminal primary or secondary amino nitrogen, but also one or more intermediate secondary amino groups or even a pendant hydroxyl groups. In addition, a relatively small but significant amount of carboxyl groups may be introduced into the polymer if aminolysis is not carried out under essentially anhydrous conditions. Having some content of hydrophilic groups, as those mentioned may be desirable in the cured films and to the extent they are felt to contribute desirable properties to the cured film, their presence may be tolerated or even favored by taking deliberate steps to introduce them.

Such hydrophilic groups may be particularly desirable when the coating system is to be dispersed or dissolved in aqueous media.

In a modified embodiment of the invention, a portion of the reactive amine content of the component 1) polymer may be reacted with a monoethylenically unsaturated compound of formula II, such as a (meth)acrylonitrile, a (meth)acrylamide or a mono(meth)acrylate such as alkyl (meth)acrylate. This may be carried out before the polyfunctional (meth)acrylate is mixed with the amine-containing polymer constituting component 1). Alternatively, part or all of the monofunctional unsaturated compound, such as mono (meth)acrylate, may be added to the polyfunctional (meth)acrylate of component 2) whereby such component 2) contains both a monofunctional unsaturated compound of formula (II) and polyfunctional (meth)acrylate which react simultaneously with the amine groups provided by component 1).

This use of a monofunctional unsaturated compound reduces the amount of reactive amine that is available for reaction with the polyfunctional unsaturated (meth)acrylate of component 2) and provides for greater versatility in producing products having a variety of desired properties in the coatings systems of the present invention, e.g. pot-life extension, coating gloss, hydrophobicity, coefficient of friction, surface content angle, etc.

The general class of monofunctional unsaturated compounds that may be used to reduce the amount of active hydrogen or primary or secondary amine groups provided by the amine-containing polymer to be used as component 1) may be a compound of the general formula:

$$H_2C{=}C(R){-\!\!-}X \qquad (II)$$

wherein

R is H or $CH_3$, preferably being H, and

X is an electron-withdrawing group, such as a group selected from —CN, —$CON(R^2)(R^3)$, and —$COOR^4$, $R^2$ being H or ($C_1$ to $C_{20}$) alkyl, $R^3$ being H or $C_1$—$C_{20}$ alkyl and $R^4$ being selected from ($C_1$—$C_{20}$) alkyl groups which may be substituted with halogen atoms, such as the specific compounds: a mixed ($C_{16}$—$C_{20}$) alcohol acrylate, isobornyl acrylate and hexafluoroisopropyl acrylate. Examples of such compounds include acrylonitrile, alkyl (meth)acrylates, (meth)acrylamides and N-alkyl-substituted-(methn)acrylamides.

When a primary amine group in the polymeric component 1) takes on a single unsaturated compound of formula (II), the production of reaction product may be represented by the equation:

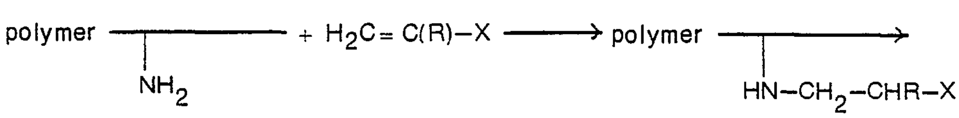

When the same addition occurs with a secondary amine group on the component 1) polymer, the active hydrogen on the secondary amine nitrogen is replaced by a group —$CH_2$—CHR—X and is no longer available for crosslinking by component 2). Therefore, the amount of monofunctional compound of formula II should not be so great as to eliminate so many of the active hydrogen atoms on primary or secondary amine nitrogen atoms as to preclude adequate addition of component 1) polymer across the double bonds of the polyfunctional component 2) to crosslink the composition to the extent necessary to provide the desired mechanical and resistance properties in the cured products. The same range of ratios of component 2) to component 1) (0.5 to 3.5 equivalents of unsaturated groups in component 2) per equivalent of amine (primary and secondary total) in component 1)) is applicable to the situation when component 2) contains both monofunctional and polyfunctional unsaturated compounds, provided that the latter compound supplies at least 0.5, and preferably 1.5 to 2 (meth)acryloxy unsaturation equivalents per equivalent of amine nitrogen in component 1). If part or all of the monofunctional unsaturated compound of formula II is first reacted with the amine-containing component 1), the resulting reduction of reactive amine content in the component 1) polymer should be taken into consideration when subsequently determining the ratio used in reacting component 2) with component 1).

The component 2) not only serves to crosslink the composition but it may also be selected to alter the properties of the final cured product. This is especially true when one of the more "complex" polyfunctional (meth)acrylates, such as those mentioned in the paragraphs above-identified by the letters A) to N) is used in the composition. In addition, a monofunctional compound of formula II may be selected with the intention to provide modified properties of the cured product. There may also be used as component 2) a mixture of two or more of the polyfunctional unsaturated (meth)acrylates, again for the purpose of crosslinking and also modifying the final mechanical, optical, and chemical resistance properties.

Component 2) may include a vinyl addition polymerization inhibitor, such as hydroquinone, in small amounts, such as 0.01 to 0.2% by weight of the component.

The compositions comprising the imine-containing polymer or polymers making up component 1) and the polyfunctional (meth)acryloxy crosslinking compounds constituting component 2) have room temperature pot stability considerably longer than compositions containing the corresponding amine polymer which has a stability of about 15 minutes to several days depending on the particular amine-containing polymer(s) used for component 1) and the particular unsaturated poly(meth)acrylate(s) used therein. The stability of both the amine and imine group-containing polymers can be enhanced by storage at temperatures below normal ambient temperatures, such as about 10°C to less than —10°C. Similarly, the stability is generally extended in duration at any given temperature when an appreciable amount of a reaction retardant, such as a volatile ($C_3$ to $C_{10}$) ketone or aldehyde, e.g. acetone benzaldehyde or butyraldehyde, is added to the composition containing both components 1) and 2) or when such composition is also diluted in effect by the addition of various materials needed to provide modifications of luster, colour, and the like, such as fillers, pigments.

The volatile stabiliser that retards the reaction may be used in various amounts of about 0.5 to 80% by weight, based on the total weight of the two reactive compounds 1) and 2). However, the stabiliser may also serve as a part, or in some instances, as the entire vehicle or solvent medium for the coating compositions. Thus, acetone, cyclohexanone, methyl ethyl ketone, methyl butyl ketone, diethyl ketone, methyl hexyl ketone, benzaldehyde, or isobutyraldehyde, may be used in low quantities or proportions of about 0.5 to 3% by weight or even in larger quantities to serve as a component of the vehicle or as the entire solvent component of the vehicle.

The presence of a small amount of ketone or aldehyde as just described apparently is in equilibrium with primary amine groups provided by component 1). Much greater stability is obtained when substantially all of the primary amine groups are converted by chemical reaction (and removal of liberated water) of these groups with any $C_3$—$C_{10}$, preferably $C_7$—$C_{10}$, ketone, mentioned hereinabove, and especially ethyl amyl ketone and diisopropyl ketone. The use of ketones free from $\alpha$-methyl groups such as ethyl amyl ketone and diisopropyl ketone is especially advantageous in component (3) and/or in reaction with at least some of the groups of (1) because these ketones apparently have little tendency to become involved in undesirable side-reactions. The compositions comprising, as component 1) thereof, the ketimine-containing polymers obtained as just described (wherein there are substantially no primary amine groups) or one of the polymers containing mers of the ketimine or aldimine monomers of U.S. Patents 3,037,969 or 3,497,485 have extended pot-life in anhydrous conditions. They also provide hydrocurable compositions which are adapted to cure when exposed to ambient conditions of temperature and relative humidity (e.g. 20—25°C and 20 to 90% R.H.).

Thus, the coatings and/or impregnations of the invention may be derived from a composition which is susbtantially anhydrous and in which component (1) is a ketimine-containing amidation product of a vinyl addition copolymer containing units of at least one $C_1$—$C_4$ alkyl acrylate and/or methacrylate with an aliphatic amine having at least two primary amine groups, preferably ethylene diamine, substantially all of the primary amine groups in the amidation product having been converted into ketimine groups by reaction with an aliphatic or alicyclic $C_3$—$C_{10}$ ketone, preferably diisopropyl ketone or ethylamyl ketone, with removal of the water liberated by that reaction, whereby the

composition is hydrocurable when applied to surfaces of a substrate for coating, adhering or sealing thereof under ambient conditions of temperature (20—25°C) and relative humidity of at least 20%.

Even with the "chemically combined" type of blocked amine, there may be included additional free ketone or aldehyde of the same constitution as that used in making the amine to serve as part of or all of the solvent. The compositions of the preent invention may be applied to form clear, protective, and decorative coating and/or impregnant films. However, they may also contain various additives other than those which react to form the crosslinked binder, body, or matrix of the film. Such additives may be plasticizers, such as dioctyl phthalate, pigments and inorganic fillers, such as glass, titanium dioxide, silica, barite, and calcium carbonate, colouring matter, such as dyestuffs, anticorrosive agents, and waterproofing or water-repellants, such as paraffin waxes.

The compositions may be formulated by mixing component 1) with component 2) and suitable solvents, dispersing agents, fillers, pigments and the like and storing the composition if necessary, at low temperature, such as from −10°C to +10°C until it is used at ambient temperatures. If, however, it is not to be used within a period of one to three days, it is more practical to make up the composition as a two-package system, one package containing component 1) and the other component 2) with polymerization inhibitor, optionally with a monofunctional compound of formula II above. Suitable solvents may be present in either or both packages. Pigments, fillers, and the like may be included in one or the other of the packages or even part in one, and part in the other. Instead of including the monofunctional compound of formula II in the second package containing component 2), such monofunctional compound (or compounds) may be included, optionally with a vinyl polymerization inhibitor in the first package so that it may have an opportunity to react with primary or secondary amine groups while in storage and/or during shipment of the two-package system to the point of use where they are mixed just prior to use.

After mixing the two packages in proper proportions, the resulting composition may be used for coating numerous substrates, such as those of metals, wood, glass, and plastics to produce thereon upon ambient curing, with or without acceleration thereof by heating, protective and/or decorative coating films which have an outstanding combination of properties, chemical resistance, rust-resistance, durability, e.g. to weathering, i.e. exposure to UV light, rain, etc., and hardness, toughness, flexibility, and other mechanical properties, including lubricity, frictional effects, etc. Also, the factors of low cost and toxicity involved in manufacture and use taken in conjunction with the properties obtainable on cure provide a versatility obtainable from the compositions of the present invention such that in many instances they may beneficially be used in place of other ambient curing systems heretofore used. The compositions may also be used as binders for fibrous webs to form bonded non-woven fabrics by impregnation of the webs and curing. Since the compositions of the present invention do not depend on air-curing, they are quite useful as adhesives to join sheets or panels of various materials, e.g. glass, metals, wood and plastics, such as those of polyesters (Mylar), polymethyl methacrylates (Plexiglas[R]), Cellophane, and the like.

One embodiment of the invention provides a method of forming a coating and/or impregnation according to the invention on a substrate. This method comprises applying a coating and/or impregnating composition of the invention to the substrate and curing it under ambient temperature conditions, optionally with heating to accelerate the cure. The composition may be formed from a two package system, as described above, in which one package contains component (1), the other component (2) and polymerisation inhibitor. Component (4) may be present in either or both of such packages, the package containing component (1) optionally further comprising polymerisation inhibitor when that package contains a compound of component (4). When this two package system is used the method includes the step of mixing them before application to the substrate.

In the following examples which include those illustrative of the invention, the parts and percentages are by weight and the temperatures in Celsius degrees, unless otherwise specified. Also, the following abbreviations are used:

VT for vinyltoluene
MA for methyl acrylate
BMA for butyl methacrylate
EDA for ethylenediamine
$\overline{M}_n$ for number average molecular weight
$\overline{M}_w$ for weight average molecular weight
ME for milliequivalent
d.p. for degree of polymerization
t-BP for t-butyl peracetate
KHN for Knoop Hardness No. (obtained by Tukon tester)
R.H. for relative humidity
MIBK for methyl isobutyl ketone
MM for millimoles

In the examples ,the words "Mylar", "Plexiglas", "Cellophane", "Cellosolve", "Lupersol", "Carbitol" and "Baysilone" are U.K. registered trade marks.

Example 1

a) Preparation of Poly(VT/BMA/MA//34.1/41.0/24.9)

To 800.7 g of butyl Cellosolve (2-butoxyethanol), heated to 140°C under a nitrogen atmosphere, and with rapid stirring is added a solution of 464.4 g of methyl acrylate, 766.8 g of butyl methacrylate 637.2 g of vinyltoluene, and 80.07 g of 70% t-butyl peracetate over a period of 3 hours. The addition of the solution of monomers containing catalyst is made at a uniform rate of 630 g/hour.

When the addition is completed, the solution is held at a temperature of 140°C for 1 hour and then cooled to 120°C. Then 8.0 g of 70% t-BP is added and a temperature of 120°C is maintained for $\frac{1}{2}$ hour before cooling to room temperature.

The resulting clear, amber solution contains the copolymer of the three monomers in the percentages given in the heading at 69.4% solids and has a viscosity of 73 Ns/m² as determined with a Brookfield viscometer at 25°C using a #3 spindle at 12 rpm.

Gel permeation chromatography shows:

$\bar{M}_n = 3200$; $\bar{M}_w = 9300$

The calculated dispersity ($\bar{M}_w/\bar{M}_n$) is 3.10 and the d.p. (degree of polymerization) is 27.7.

b) *Amidation of the Copolymer Obtained in Part a) with Ethylenediamine*

A solution is prepared from 1500 g of the solution obtained in part a), containing 258 g (3.0 moles) of polymerized methyl acrylate, and 121.6 g (2.03 moles) of ethylenediamine (EDA). Titration shows this solution to have an amine equivalence of 6.19 ME/g and the solution to contain a total of 3.850 equivalents of amine.

The solution is heated for 48 hours at 125°C under a nitrogen atmosphere with stirring until the amine equivalence is 5.07 ME/g.

After cooling to 90°C, 300 g of butyl Cellosolve is added to the solution. Distillation under reduced pressure (90—110°C/~15 mm) removes 287 g of distillate. This procedure is repeated, 300 g of butyl Cellosolve added, and 362 g of distillate removed. Titration of the combined distillates shows a total of 3.06 equivalents of amine to be present. Ethylenediamine consumed by reaction with the polymer is 3.85—3.06 = 0.788 equivalents or 1.58 moles. Since the d.p. of the initial polymer is 27.7, of which 33.3 mole % is methyl acrylate, there are 9.24 methyl acrylate mers per average molecule initially. On the basis that reaction with ethylenediamine converts methyl acrylate units in the polymer backbone to N-2-aminoethylacrylamide units, then (1.58/3.00) (9.24) = 4.86 of the latter units are formed per average molecule as a result of the amidation.

Gas chromatography indicates that the solution contains 1% residual ethylenediamines. A solution of 560 g of the amidation product is diluted with 400 g of butyl Cellosolve and 60 g of a strong-acid type of ion exchange resin is added to remove the excess amine. The mixture is warmed on a steam bath and stirred for 5 hours. Initially, before addition of the ion exchange resin, the amine titer was 0.491 ME/g and after removing the ion exchange resin by filtration the titer was 0.234 ME/g. This corresponds to the loss of 0.78% ethylenediamine. A gas chromatograph of the treated solution shows no ethylenediamine peak present.

The solids content of the treated solution is 34.1% and the amine equivalence based upon solids is 1.44 ME/g.

c) *Preparation of Coatings*

An acrylated epoxidized soybean oil, such as that available commercially under the trade-marked designation ACTOMER X—80, with an acrylate equivalence of 2.8 ME/g and practically no reactive residual epoxy content is diluted to 50% solids with butyl Cellosolve.

The resin solution obtained in part b) is divided into 30-g portions, each containing 14.73 ME of titratable amine. To each portion is added 2.0 g of acetone to retard the reaction with the acrylated epoxidized soybean oil.

Weighed amounts of the acrylated epoxidized soybean oil solution are then added to the resin containing solutions as indicated in Table I following:

TABLE I

| Substance | Coating Solution A | B | C | D | E |
|---|---|---|---|---|---|
| grams amine resin | 30 | 30 | 30 | 30 | 30 |
| ME amine | 14.73 | 14.73 | 14.73 | 14.73 | 14.73 |
| grams acrylate sol. | 10.52 | 13.15 | 16.31 | 18.41 | 21.04 |
| ME acrylate | 14.73 | 18.41 | 22.83 | 25.78 | 29.46 |
| acrylate/amine | 1.00 | 1.25 | 1.55 | 1.75 | 2.00 |
| acetone added (g) | 2.0 | 2.0 | 2.0 | 2.0 | 2.0 |

After tumble mixing for 20 min. the solutions are coated on Bonderite 1000 steel panels with a 178 micrometres knife and then placed in a room at 21.1°C (70°F) and 50% R.H. to dry. After three weeks in such ambient conditions of drying or curing, determination of KHN of the first set of five samples is made on a Tukon hardness tester, then all of the samples are subjected to a baking for 24 hours at 60°C (140°F) and the KHN of the same set of five samples is determined to provide a comparison of hardness obtained after 3 weeks of ambient cure without subsequent baking and the hardness obtained when the 3 week ambient cure is followed by the 24 hour baking. The rest of the results tabulated are those obtained on coatings having 3 weeks of the room temperature cure followed immediately with a 24 hour bake at 60°C (140°F). TABLE II shows the properties determined.

TABLE II

| Property | Coating A | B | C | D | E |
|---|---|---|---|---|---|
| KHN (before baking) | 12.5 | 10.4 | 7.5 | 6.2 | 4.2 |
| KHN (after baking) | 12.9 | 12.6 | 10.3 | 10.2 | 9.3 |
| Reverse Impact, J (in.-lb.) | 0.23 (2) | 25 (22) | 3.2 (28) | 2.8 (25) | 3.4 (30) |
| Mandrel Bend (in.) <3.2 mm (<$\frac{1}{8}$") diameter (all passed) | | | | | |
| QCT* 65.5°C (150°F)/100 hr | | | No change in appearance | | |
| Print resist** 60°C (140°F)/4 hr | 10 | 9 | 8 | 6 | 10 |
| Xenon Arc W 2000 hr. | | | No change in appearance | | |
| Chemical Resistance (15-min. patch*** tests) | | | | | |
| 10% HCl | 3 | 3 | 4 | 4 | 4 |
| 10% Acetic Acid | 2 | 3 | 4 | 4 | 4 |
| Acetone | 3 | 3 | 3 | 3 | 2 |
| Methanol | 2 | 3 | 3 | 2 | 2 |
| Toluene | 3 | 3 | 3 | 2 | 2 |
| Gasoline | 3 | 3 | 3 | 3 | 3 |
| 10% NaOH | 4 | 4 | 4 | 4 | 4 |

* High humidity, variable temperature testing unit (Trade name QCT)

** Scale of 0 to 10; 0 is worst (heavy pattern), 10 is best (no pattern)

*** *Patch test* — a 12.7 x 12.7 mm ($\frac{1}{2}$" x $\frac{1}{2}$") piece of 4-ply cheesecloth is placed upon the coated panel, saturated with the reagent and covered with a bottle cap 25.4 mm diameter, 12.7 mm height (~1 inch diam. x $\frac{1}{2}$" ht.) for various lengths of time, usually 15 min. to 60 min. depending on the severity of exposure used in relative comparisons.

*Ratings* —
4 — no noticeable softening or change in appearance
3 — slight softening
2 — significant softening and/or slight hazing
1 — delamination, solution, or whitening

Example 2

a) *Preparation of Poly(VT/MA//73.3/26.7)*

Using the procedure following in Example 1a) with a monomer mixture consisting of 1099 g of vinyl toluene and 401 g methyl acrylate with 21.4 g of 70% t-BP and adding this solution to 643 g of butyl Cellosolve at 140°C, a polymer with $\bar{M}_n$ 11,700, $\bar{M}_w$ 30,500, and a calculated d.p. of 109 is obtained.

b) *Amidation of Copolymer of a) above*

To 500 g of the copolymer solution of part a) in 200 g of butyl Cellosolve is added 99.8 g of ethylenediamine. The solution is heated for 40 hours at 136°C by a procedure similar to that used in Example 1b). After twice adding and vacuum distilling butyl Cellosolve, a resin solution containing 41.7% resin solids with an amine titer of 2.25 ME/g based upon solids, is obtained.

c) *Preparation of Coatings*

Solutions are prepared for coating as indicated in TABLE III following the same procedure as in Ex. 1c) except the amine-containing polymer solution obtained in part b) hereof is used:

TABLE III

| | Coating Solution | | | | |
|---|---|---|---|---|---|
| Ingredients | F | G | H | I | J |
| g of amine polymer | 25 | 25 | 25 | 25 | 25 |
| ME amine 23.23 | 23.23 | 23.23 | 23.23 | 23.23 | 23.23 |
| g of acrylate sol.* | 16.6 | 20.75 | 24.9 | 29.1 | 33.2 |
| ME acrylate | 23.23 | 29.10 | 34.9 | 40.75 | 46.50 |
| Acrylate/amine | 1.00 | 1.25 | 1.50 | 1.75 | 2.00 |
| Acetone | 2.0 | 2.0 | 2.0 | 2.0 | 2.0 |

* 50% solution in butyl Cellosolve of the same acrylated epoxidized soybean oil as used in Example 1c).

After tumble mixing the coating compositions for 20 mins., the solutions are applied to steel test panels as described in Ex. 1c) and placed in a room at 21.1°C (70°F) and 50% R.H. to dry and cure. Various of the test panels are dried and cured in the controlled (ambient) room for different periods of time (2 days to 30 days) and in some instances the ambient cure is followed by baking at 60°C (140°F) for 24 hours as indicated in the following TABLE IV listing coating properties obtained on testing the test panels after completion of the cure. The table shows the range obtained with two tests.

TABLE IV

Properties of Coatings

| Property | Ambient Cure Days | Bake | Coating F | G | H | J | K |
|---|---|---|---|---|---|---|---|
| KHN | 2 | No | 5.87 | 4.80 | 3.61 | 2.85 | 2.51 |
| KHN | 10 | No | 11.2 | 8.70 | 8.05 | 6.29 | 3.79 |
| KHN | 36 | No | 11.9 | 11.0 | 9.54 | 8.30 | 5.28 |
| KHN | 21 | Yes | 10.3 | 9.83 | 8.47 | 5.93 | 4.54 |
| Mandrel Bend (in.), | 10 | No | <3.2 mm (<1/8") diameter (all samples passed) | | | | |
| Rev. Impact (in-lb), J | 21 | Yes | (>75,) (<100) >8.5<11.3 | (100±) 11.3 ± | (>100,) (<125) >11.3<14.1 | (>100,) (<120) >11.3<13.6 | (>100,) (<120) >11.3<13.6 |
| Chem. Res. (15 min. patch tests except*) | | | | | | | |
| 10% acetic acid* | 12 | No | 1 | 1 | 2 | 3 | 3 |
| 10% acetic acid* | 30 | No | 1 | 1 | 3 | 3 | 4 |
| Methanol | 30 | No | 3 | 3 | 3 | 3 | 3 |
| Acetone | 30 | No | 3 | 3 | 3 | 3 | 3 |
| Toluene | 30 | No | 3 | 3 | 3 | 3 | 3 |
| Gasoline | 30 | No | 3 | 3 | 3 | 3 | 3 |
| 10% NaOH | 30 | No | — | — | — | — | 4 |

* 30 min. patch test

Example 3
Chemical Blocking with Acetone

a) *Acetone Imine*

To 270 g of 34.1% solution of the amine-containing polymer obtained in Ex. 1b), there is added 75 g of reagent grade acetone and 50 g of Davison[R] number 4A molecular sieves to withdraw moisture; the mixture is heated and refluxed 2 hours with stirring under a nitrogen atmosphere. After cooling, the mixture is filtered and stored in a dried bottle. Titration shows an amine equivalence of 0.387 ME/g.

b)

A 50% solution is prepared by dissolving 400 g of Actomer X—80 in 400 g of distilled butyl Cellosolve. The solution is dried by adding 40 g of Davison 4A molecular sieves and stirring at room temperature for 4 hours. The sieves are removed by filtration and the solution is stored in a dried bottle. The acrylate equivalence is 1.40 ME/g.

c) *Pot-Life Comparisons*

To 100 g of anhydrous acetone imine of part a) hereof there is added 35.1 g of the dried Actomer X—80 solution in butyl Cellosolve obtained in part b) hereof and the resulting solution is stored in a bottle which had been previously dried at 125°C to remove traces of moisture. This solution is designated 3A.

A 50-g portion of the 3A solution is transferred to a second bottle and 0.50 g (1.0%) water is added with rapid stirring. This solution is designated 3B.

On standing at room temperature (~23°C) solution 3B gels in 50 minutes while solution 3A remains fluid for 2 days and gradually increases in viscosity to the point of gelation at 4 days.

d) *Coatings from an Acetone Imine Blocked Resin System*
Coatings are prepared as follows:

| Coating Solutions: | L | M | N |
|---|---|---|---|
| grams of acetone imine of part a) | 43.32 | 43.32 | 43.32 |
| ME amine | 16.76 | 16.76 | 16.76 |
| grams 50% Actomer X—80 solution obtained in part b) | 15.78 | — | 3.29 |
| grams, trimethylolpropane triacrylate (TMPTA) | — | 2.08 | 1.64 |
| ME, Actomer X—80 (1.40 ME/g) | 22.09 | — | 4.61 |
| ME,TMPTA (10.63 ME/g) | — | 22.11 | 17.43 |
| ME, total acrylate | 22.09 | 22.11 | 22.04 |
| Acrylate/amine ratio | 1.32 | 1.32 | 1.32 |

After tumble mixing for 20 min. the solutions are coated on Bonderite 1000 steel panels with a 178 micrometres film spreader and then cured at 21.10°C (70°F)/50% RH. At the times indicated in the following TABLE V, the properties are determined:

TABLE V

| | Cure | Bake | Coating | | |
|---|---|---|---|---|---|
| | | | A | B | C |
| KHN 21.1°C(70°F) | 3 wks 50% RH | none | 8.64 | 14.2 | 12.8 |
| KHN | " | 60°C(140°F) /24 hr. | 12.9 | 18.0 | 16.2 |
| Reverse Impact, N (in/lb) | " | " | 2.7(24) | <0.23(<2) | <0.23(<2) |
| Mandrel Bend (in)mm | " | " | <3.2(<1/8) | >12.7(>1/2) | >12.7(>1/2) |
| QCT 65.6°C (150°F) /100 hr. | " | " | No change in appear. | | |
| Print Resist 60°C (140°F)/4 hr. | " | " | 8 | 10 | 8 |
| Xenon Arc W | " | " | >2000 hr. | partial delamination | 1500 hr. |

TABLE V (continued)

| Chemical Resistance | Coating L | Coating M | Coating N |
|---|---|---|---|
| (3 wks ambient curing plus 140°F/24 hr) (15-min patch tests) | | | |
| 10% HCl | 3 | 1 | 1 |
| 10% Acetic acid | 3 | 1 | 1 |
| Acetone | 3 | 3 | 3 |
| Methanol | 3 | 2 | 2 |
| Toluene | 3 | 1 | 1 |
| Gasoline | 3 | 4 | 4 |
| 10% NaOH | 4 | 4 | 4 |

Example 4
Chemical Blocking with MIBK/Toluene Azeotrope

*Ketimine-containing Polymer*

To 283 g of an EDA aminolysis product (having 2.42 ME/g amine titer) of a copolymer of 67.3% VT and 32.7% MA having a $\overline{M}_n$ of 3000 is added 150 g of toluene and 150 g of methyl isobutyl ketone. The resulting solution is heated at reflux in a flask equipped with a stirrer, condenser, and a Dean-Stark trap to separate water formed by the reaction of amine with ketone and under a nitrogen atmosphere. After refluxing 2 hours, 14.1 g of water has collected in the trap (theory 12.3). The resin solution is then stripped under vacuum until the solids content of the resin solution is 44.0% solids. Titration in the presence of water shows the solution contains 2.10 ME/g of amine.

b) *Coating*

A clear coating is prepared from the ketimine-containing polymer obtained in part a) as follows:

| | |
|---|---|
| Imine blocked polymer of part a) | 46.1 g |
| Actomer X—80 | 25.0 |
| Butyl Cellosolve | 2.2 |
| Xylene | 28.0 |
| Methylisobutylketone | 28.0 |

The initial solution shows a Gardner-Holdt viscosity of A—1 and after 7 hours at ambient temperature a viscosity of D+. A similar formulation using the unblocked aminolysis product starting material of part a) shows a viscosity of Y two hours after mixing and gels at 2.5 hours.

Coatings of the blocked resin system on Bonderite 1000 steel panels are glossy and after 7 days at ambient temperature show a KHN of 4, resistance to 10% acetic acid of greater than 30 minutes, and resistance to organic solvent and 10% aqueous sodium hydroxide solution.

Example 5
Prereaction of Amidated Resins with Monofunctional Acrylates and then Preparing Coatings with Polyacrylates

The EDA amidation product of Ex. 1b) is mixed in separate containers with various monofunctional acrylic monomers as follows:

A. Methyl acrylate (MA)
B. Acrylic acid ester of a mixture of ($C_{16}$—$C_{20}$) alcohols (CEA)
C. Hexafluoroisopropyl acrylate (HFIPA)

The relative proportions of the respective components of the several mixtures are such as to provide, for each amine nitrogen ME of the amidation product, from about 0.25 to 1.25 ME of unsaturate in the MA, from about 0.25 to about 0.50 ME in the CEA, and from about 0.5 to about 1.0 ME in the HFIPA. The solutions are allowed to react at room temperature for four days and the resulting solutions may be provided with about 7% to 12% by weight of a ketone, e.g. acetone. Then a 50% solution of Actomer X—80 is mixed with each of the prereacted polymers to provide clear coating solutions having various ratios of the ME of the Actomer X—80 and ME of amine nitrogen (before prereaction) ranging from 0.75 to 2.0. Such coatings can be applied as described in the previous examples.

Example 6

a) A poligomer is prepared by adding a solution containing 177.5 g of the methylisobutyl ketimine of 2-aminoethyl methacrylate of U.S. Patent 3,037,969 (Ex. 2), 265.5 g of methyl methacrylate, and 19.0 g of 70% t-BP to 190 g of butyl Cellosolve while maintaining the mixture at a temperature of 130°C over a period of 5 hours. When the addition is complete, an additional charge of 1.9 g of 70% t-BP is added to the solution and heating at 130°C is continued for 0.5 hours before cooling.

The resulting polymer solution has the following properties:

| | |
|---|---|
| Viscosity Brookfield, #4 spindle at 3 RPM; 25°C | 120, 8 Ns/$m^2$ |
| Amine titer | 0.88 ME/g |
| Solids | 68.1% |
| $\bar{M}_w$, GPC | 69,300 |
| $\bar{M}_n$, GPC | 13,500 |
| Calc'd dp | 100.4 |

b) A second poligomer is prepared by the method described in part a) by adding a solution containing 177.5 g of the methylisobutyl ketimine of 2-aminoethyl methacrylate, 49.5 g of methyl methacrylate, 224.6 g of styrene and 19.35 g of 70% t-BP to 194 g of butyl Cellosolve maintained at a temperature of 140°C over a period of 5 hours. An additional charge of 1.9 g of 70% t-BP is then added to the batch and heating at 140°C continued for 0.5 hours before cooling.

The resulting resin solution has the following properties

| | |
|---|---|
| Viscosity, Brookfield, #4 spindle at 6 RPM, 25°C | 452 Ns/$m^2$ |
| Amine titer | 1.17 ME/g |
| Solids | 64.7% |
| $\bar{M}_w$ (GPC) | 17,100 |
| $\bar{M}_n$ (GPC) | 5,620 |
| Calc'd dp | 43.5 |

c) These imine poligomers are formulated with Actomer X—80 at a 1.0/1.3 amine/acrylate ratio in three solvent systems, butyl Cellosolve, 1 butyl Cellosolve/1 MIBK, and 1 butyl Cellosolve/1 xylene/1 MIBK (weight ratios).

All six samples exhibit gel times greater than 8 hours. 7-day ambient-cure samples, in all cases, are soft (KHN's between 0.5 and 3.00), flexible and display excellent impact strength. Solvent and acid resistance are poor. All are swelled but not dissolved by methylene chloride. 7-day bake (140°F) samples of coatings made using the polymer of part a) have good hardness and good resistance to acid (30 min. 10% HAc) with acceptable solvent resistance. 7-day bake (140°F) samples of coatings made with the poligomer of part b) do not show any better acid and solvent resistance properties than the ambient-cure samples.

Example 7

Poligomer

a) A poligomer containing styrene and methyl acrylate at a 1:1 mole ratio is prepared at 77% solids in butyl Cellosolve at 140°C with 70% t-BP catalyst by the method described above. Properties of the resulting polymer solution are:

| | |
|---|---|
| Solids | 77.2% |
| $\bar{M}_w$ (GPC) | 8880 |
| $\bar{M}_n$ (GPC) | 3170 |
| Appearance | clear, water-white |

b) *Amidation with EDA*

To 1168 g of the above polymer solution there is added 100 g of butyl Cellosolve and 629 g of ethylenediamine. After heating for 33.25 hours in the temperature range of 115—130°C, vacuum stripping to remove unreacted ethylenediamine, and diluting with butyl Cellosolve, a resin solution with the following properties is obtained:

| | |
|---|---|
| Solids | 50.9% |
| Amine titer | 3.36 ME/g |
| Viscosity; Brookfield | 780 Ns/m$^2$ |
| Appearance | clear, light amber |
| Acid titer | 0.82 ME/g |

c) *Amidation with 1,3-propylenediamine*

To 982.7 g of the polymer solution obtained in part a) there is added 100 g of butyl Cellosolve and 653.8 g of 1,3-propylenediamine. This solution is heated for 23.0 hours at 125—130°C, vacuum stripped to remove unreacted diamine, and diluted with butyl Cellosolve to yield a resin solution with the following properties:

| | |
|---|---|
| Solids | 50.9% |
| Amine titer | 2.52 ME/g |
| Viscosity, Brookfield | 2340 Ns/m$^2$ |
| Appearance | clear, pale yellow |
| Acid titer | 0.33 ME/g |

d) *Coatings*

Coating solutions are prepared by mixing

| Amidated Resin | Actomer X—80* | Acetone | Butyl Cellosolve |
|---|---|---|---|
| 10 g (part b)) | 9.32 g | 2 g | 3.1 g |
| 10 g (part c)) | 6.98 g | 2 g | 4.3 g |

* 50% solution in butyl Cellosolve

After mixing for 5 minutes, the solutions are each applied to Bonderite 1000 steel panels as a 152 micrometres wet film. After curing under ambient conditions for three days neither of the coatings shown any delamination, but both show moderate softening when exposed to 10% acetic acid solution for 15 minutes. When exposed to liquid methylene chloride for 15 min. the coating from the resin of part b) swells and delaminates from the substrate indicating a crosslinked polymer network to be present. The coating from the resin of part c) is unusually resistant to this solvent and shows no signs of swelling or delamination indicating the formation of a highly crosslinked polymer network.

Example 8

Acrylate/amine coating system containing a volatile acid as a blocking agent

To 10 g samples of an ethylendiamine-amidated copolymer of styrene and MA in 1.5 to 1 mole ratio there is added 2.5 g of phenoxyethanol and glacial acetic acid (HAc) in the following amounts:

| Samples | Equiv HAc/Equiv Resin | g HAc/g Resin |
|---|---|---|
| A | 1.0/1.0 | 0.33/10 |
| B | 1.5/1.0 | 0.50/10 |
| C | 2.0/1.0 | 0.66/10 |
| D | 3.0/1.0 | 1.0/10 |
| E | 0/1.0 | 0/10 |

After mixing thoroughly, 5.9 g of a 50% solution of Actomer X—80 dissolved in butyl Cellosolve is added to each solution (A thru E). The solutions are shaken until homogeneous, coated on Bonderite 1000 steel panels, and gelation times are determined on the solutions as follows:

| Samples | Gelation Time (hours) |
|---|---|
| A | 8 |
| B | 18 |
| C | 24 |
| D | 36 |
| E | 0.25 |

After curing for 3 weeks under ambient conditions all of the coatings on the panels are hard, clear, tough, rust-free, and show virtually identical resistance to methylene chloride and 10% acetic acid solution.

Example 9

Partial blocking of an amidated resin by prereaction with a monoacrylate

To 10 g of the same EDA-amidated styrene/MA copolymer used in Ex. 8, there is added 4.65 g of isobornyl acrylate (IBA) and the resulting solution is allowed to stand at room temperature for 4 days. During this time the viscosity increases. Then, 3.99 g of a 50% solution of Actomer X—80 dissolved in butyl Cellosolve, together with 2 g of butyl Cellosolve and 4 g of acetone, are added to this solution. Pot-life is extended by the prereaction of the IBA with the amine-containing polymer.

A coating prepared on a Bonderite 1000 panel dries tack-free overnight at ambient temperature. The film is glossy and exposure to 10% acetic acid solution for $\frac{1}{2}$ hr. shows only slight softening. Exposure to methylene chloride swells the film, indicating a crosslinked network.

The coating solution gels after standing about 2 weeks at ambient temperature.

Example 10

Chemical blocking with cyclohexanone using cyclohexane as solvent

a) To 200 g of a butyl Cellosolve solution of the EDA-amidated 1.5:1 mole ratio Styrene/MA copolymer used in Ex. 8 is added 100 g of cyclohexanone and 200 g of cyclohexane. The resulting solution is heated at reflux in a flask equipped with a Dean-Stark trap to collect water formed. When the evolution of water is completed excess cyclohexanone and cyclohexane solvent are removed by distillation under reduced pressure and then butyl Cellosolve is added to the polymer to yield a solution thereof with the properties:

| | |
|---|---|
| Viscosity | Z |
| Solids | 26.9% |
| Amine titer | 1.43 ME/g (solids) |
| Color | light amber |

b) In a similar manner EDA-amidated starting copolymer of part a) hereof is reacted with MIBK to block the $NH_2$ groups with the MIBK ketimine using cyclohexane to azeotropically distill water formed. Physical properties are:

| | |
|---|---|
| Viscosity, GH, 25°C | Z1+ |
| Solids | 35.8% |
| Amine titer | 1.90 ME/g (solids) |
| Color | light amber |

c) Coatings are prepared by mixing the ketimines of parts a) and b) with acrylated epoxidized soybean oil, such as Actomer X—80 at an amine/acrylate ratio of 1.0/1.3 in butyl Cellosolve/xylene (2/1).

Ambient-cured coatings on test panels are soft, with excellent flexibility and impact strength. The coatings display acceptable acid and solvent resistance. The coating is swelled but not dissolved by methylene chloride.

Example 11
Benzaldehyde Imine Block

To a solution of 250 g of an EDA-amidated copolymer (styrene/MA//2/1 mole ratio) which had been treated with a strong acid ion exchange resin to remove residual EDA, there is added 100 g of toluene and 59.1 g of benzaldehyde. The resulting solution is heated at reflux for 1.5 hrs. using a Dean-Stark trap to collect water formed. By this time 3.5 ml of water is collected and the formation of water stops. Initially, 558 ME of resin is charged, based upon a titer of 2.23 ME/g for the starting amidated copolymer, together with 558 MM of benzaldehyde. On the basis that all of the initial amine titer is primary amine, the water formed (194 MM) calculates as 34.8% conversion to imine.

The solution is then stripped of residual benzaldehyde and toluene under reduced pressure (300 g of distillate collected), cooled, and then diluted with 50 g of xylene.

| | |
|---|---|
| Appearance | clear, reddish amber |
| Amine titer | 1.90 ME/g (solids) |
| Solids | 41.1% |

Coating compositions are formed by mixing this solution with Actomer X—80 at three amine/acrylate stoichiometries: 100, 75 and 50 percent in butyl Cellosolve.

7-day ambient-cure results indicate that these samples are slightly crosslinked. Coatings obtained are of medium hardness but display little resistance to reverse impact ~0.23 J (~2 in.-lb.). They are heavily blistered and disintegrated by acid (30 min. 10% HAc). Solvent resistance is acceptable or poor at the high and low stoichiometries, respectively. The coating is swelled but not dissolved by methylene chloride.

7-day bake 60°C (140°F) results on these coatings show that they are crosslinked sufficiently to give hard, flexible coatings with excellent impact resistance in addition to fair resistance to acid (4H pencil H pencil) and solvents.

Example 12

a) A coating composition prepared by mixing (1) an EDA-aminolysis product (having 2.42 ME/g amine titer) of a copolymer of 67.3 weight percent vinyltoluene and 32.7 weight percent methyl acrylate, the copolymer having a number average molecular weight of 3000, and (2) an acrylic acid adduct of an epoxidized linseed oil containing an average of about 2.2 epoxy groups per molecule, substantially all of such groups being reacted with acrylic acid to form a polyacryloxy compound having an average of at least 2 unsaturated acryloxy groups therein, with (3) butyl Cellosolve as the solvent, the proportions of (1) and (2) providing an amine/acrylate equivalent ratio of 1.0/1.3.

The coating composition is applied to Bonderite 1000 steel panels by brushing, dripping or spraying and cured 7 days at ambient temperature.

b) Another coating composition is prepared as described in part a) of this example except component (2) is replaced by an acrylic acid adduct of epoxidized soybean oil, again containing at least 2 unsaturated acryloxy groups therein. Actomer X—80 or other similar commercially available product may be used. The amine/acrylate equivalent ratio is the same as in part a).

c) A third coating composition is prepared as described in part a) hereof except that component (2) is replaced by an acrylated urethane polyester oligomer. A commercially available product of this type may be used, such as Uvithane 783, containing at least 2 unsaturated acryloxy groups. The same amine/acrylate ratio of 1.0/1.3 equivalents is employed.

d) A fourth coating composition is prepared that is the same as that in part a) but the second component is replaced by a poly (200) ethylene glycol diacrylate, an example of which that is commercially available being sold under the trade designation SR—259.

e) A fifth coating composition is prepared like that in part a) hereof in all respects except that component (2) of that composition is replaced by a diacrylate ester of a liquid Bisphenol A epoxy resin. A commercially available product of this type is Epocryl DRH—370.

Coatings of each of the compositions prepared in b), c), d) and e) are applied and allowed to cure 7 days at ambient temperature. If desired, the ambient cure may be supplemented, or replaced by a baking cure at elevated temperatures. However, the general properties obtained from the several coatings systems of parts a) through e) hereof may be summarized as in TABLE VI.

TABLE VI

| System | 7 Day Ambient Cure Properties |
|---|---|
| A+B | relatively soft, flexible coatings with excellent impact strength, acid and solvent resistance |
| C | soft, flexible coatings with excellent impact strength, poor acid resistance, but good resistance to solvents, e.g., gasoline and xylene |
| D | moderately hard, flexible coatings with excellent impact strength, no resistance to acid, but good solvent resistance |
| E | very hard, flexible coatings with excellent impact strength, very good acid resistance and excellent solvent resistance. |

Example 13

a) *Polymer 55 MMA/20 BMA/25 Styrene; dp 19*

A 5-liter, 4-necked flask equipped with a thermometer, mechanical stirrer, nitrogen sparge, Friedrich condenser, 2000 ml pressure-equalizing addition funnel and "Thermowatch" utilized with a pot lifter and heating mantle is charged with 500 g of butyl Cellosolve. The flask is heated, under nitrogen, to 150°C and to it then is slowly added a mixture of 1100 g methyl methacrylate (11.0 moles), 400 g of butyl methacrylate (2.82 moles), 500 g of styrene (4.81 moles), 80 g of Lupersol 70 (75% t-butyl peracetate in mineral spirits; 3% on monomers), and 20 g of 2-hydroxyethyl mercaptan (1% on monomer) over a period of 9.25 hours. The resulting product is stirred 0.25 hours longer at 150°C whereupon 8.0 g of Lupersol 70 is gradually added over a period of 0.25 hours and the mixture is then held 1.0 hour longer at temperature to complete residual monomer chase. Product specifications: $\bar{M}_w = 4340$; $\bar{M}_n = 2040$; $\bar{M}_w/\bar{M}_n = 2.13$; 80% solids in butyl Cellosolve.

b) *Amidated Resin*

A 2-liter, 4-necked flask equipped with a thermometer, mechanical stirrer, nitrogen sparge, variable take-off distillation head, and "Thermowatch" utilized with a pot lifter and heating mantle is charged with 484.4 g of the oligomer obtained in part A (0.19 mole, 80% solids in butyl Cellosolve), 79.8 g of diethylenetriamine (0.77 mole), and 103.4 g of xylene. The mixture is heated at 145°C, under nitrogen, for 14.5 hours at which point the residual amine titer is 62.4% of initial charge. Temperature is maintained by the continuous removal of solvent and by-products (methanol, butanol) during the course of the reaction. To the flask is then added sufficient deionized water to remove residual xylene by azeotropic distillation and reduce product solids to ~60%. The resulting acrylic polyamine has an amido functionality of ~4.1 and is recovered as a clear, light amber solution with the following specifications:

| | |
|---|---|
| Solids: 61.9% in butyl Cellosolve/water | (36:64) |
| Viscosity, spindle 4, 0.6 RPM; 25°C | 5180 Ns/m$^2$ |
| Amine Equivalent Weight | 483 |
| Acid Number | 34.2 |
| Total Titer | 2.68 meq/g |

c) *Coating with Trimethylolpropane Triacrylate*

To 20.0 g of amidated resin solution is added 4.7 g of acetone, 5.0 g of butyl Cellosolve, and 7.8 g of a 50% solution of trimethylolpropane triacrylate. After mixing for 10 minutes the solution is coated as a 152 micrometres wet film on Bonderite 1000 panels. After curing one week under ambient conditions the coating shows a KHN of 6.4 and a pencil hardness of 3H. The coating is swelled, but insoluble, in methylene chloride. Patch tests (15 min) show that the coating has good resistance to vinegar, lemon juice, toluene, acetone, methanol, and 10% sodium hydroxide solution.

Example 14

a) *Resin*

A 3 liter, four-necked, round-bottomed flask equipped with a mechanical stirrer, a thermometer, a "Thermowatch", an oil batch utilized with a pot lifter, a pressure-equalizing addition funnel and a variable takeoff distillation head protected with a Dewar condenser, is charged with 250 g of butyl Cellosolve. The system is sparged with nitrogen and heated to 150°C. To the flask is then added a solution of 250 g BMA (1.76 moles), 750 g MMA (7.5 moles), 10 g mercaptoethanol (0.13 mole), and 40 g of 75% t-butyl peracetate (Lupersol 70), under a nitrogen sparge, over a period of 9.75 hours. The rate of addition is such as to prevent excessive monomer reflux at 140—150°C. Fifteen minutes after the completion of the feed, 4.0 g of 75% t-butyl peracetate (Lupersol 70) is added slowly to the flask to "chase" (i.e., to complete the reaction of residual monomer. The reaction mixture is maintained at 150°C for fifteen minutes longer, then diluted with 140 g of xylene and cooled to ambient temperature to give 1433 g of product as a clear, light yellow solution at 73.4% solids in butyl Cellosolve (64%)/xylene (36%). According to a gel permeation chromatographic test, the $\bar{M}_w$ of the oligomer is 7620 and the $\bar{M}_n$ is 2650 ($\bar{M}_w/\bar{M}_n$ is 2.88).

b) *Amidated Resin*

The amidation procedure of Example 1 b) is repeated with 500.0 g (3.4 mol, 73.4% solids in BC/xylene/64/36) of the oligomer prepared in part a) hereof, 52.5 g (0.51 mol) of diethylenetriamine, and 100 g of xylene to provide a product with the following specifications (and having an amide-functionality of about 3.5):

| | |
|---|---|
| Solids (125°C/1 hr) | 43.5% |
| Viscosity (Brookfield, Spindle 4 at 0.6 RPM and 25°C) | 5550 Ns/m$^2$ |
| Amine Equivalent Number | 870 |
| Acid Number | 11.8 |
| Total Titer | 1.36 meq/g |

c) *Coating*

To 11.49 g of resin solution obtained in part b) there is added 2.48 g of a 50% solution of trimethylolpropane triacrylate dissolved in butyl Cellosolve. After mixing for 10 minutes the solution is coated on Bonderite 1000 as a 178 micrometres wet film. Curing 1 week at ambient temperature yields a coating with a KHN of 8.9 and a pencil hardness of 3H which is insoluble in methylene chloride and resistant to 15 minutes exposure to lemon juice, toluene, acetone, methanol, and 10% sodium hydroxide solution.

Example 15

a) *Amidated Resin*

A mixture of 608.8 g of the cooligomer of 75 parts methyl methacrylate/25 parts butyl methacrylate obtained in part a) of Ex. 14, 105.1 g of di(3-aminopropyl)amine and 44 g of butyl Cellosolve is heated at 135—140°C for 15 hours and at 145—150°C for two hours. To maintain reaction temperature, distillation is allowed to proceed; to control viscosity, 100 g of xylene is added to replace solvent lost by distillation. The mixture is then cooled to 80°C and 500 ml of water is added with stirring. The polyamine produced has 41.3% solids, a titer of 1.43 meq/g and a calculated amido functionality of 2.4.

b) *Coating*

To 35.0 g of amidated resin obtained in part a) there is added 5.09 g of xylene and 5.44 g of trimethylolpropane triacrylate. The solution is cast as a 152 micrometres wet film on Bonderite 1000 immediately after mixing. The coating is tack-free after 24 hr. ambient curing and has a KHN of 1.32 which increases to 4.23 after one week. The film is insoluble in methylene chloride when cured 1 week at ambient temperature.

Example 16

a) Oligomeric methyl acrylate with $\bar{M}_w$ of 1500 and $\bar{M}_n$ of 800 is prepared as follows: A slurry of 53.8 g of potassium tertiary butoxide in 400 g of toluene is stirred in a nitrogen atmosphere in a 3 liter, 3-necked flask equipped with stirrer, thermometer, condenser, and dropping funnel. A total of 2066 g of methyl acrylate (MA) is added over two hours while external cooling is used to maintain a 70°C reaction temperature. After an additional 4 hours at 70°C, 25.6 g of concentrated sulfuric acid is added. Toluene and unreacted methyl acrylate are then removed at reduced pressure. Conversion of methyl acrylate to the oligomer characterized with $\bar{M}_n$ 800 is 87%.

b) Then, 516 g of this methyl acrylate oligomer and 468.8 g of ethylenediamine are heated in a stirred flask equipped for distillation. An initial amine titer of 16 meq/g (in acetone/water, 1/1), is observed. The mixture is then heated until methanol refluxes vigorously; distillation of methanol is then allowed at a reaction temperature of 110°C. After 12 hours, 126 g of methanol is collected. The pressure is reduced and ethylenediamine is distilled, finally as a codistillate with water. A total of 107 g of ethylenediamine is recovered. The reaction mixture is diluted with water to 73.2% solids and this solution has a titer of 7.31 meq/g.

c) To 78.3 g of a 50% solution of acrylated epoxidized soybean oil (e.g. Actomer X—80) dissolved in butyl Cellosolve there is added 10.0 g of amidated polymer obtained in part b). After mixing, the resulting clear solution is coated on Alodine aluminum panels. The coatings are cured for 1 week at ambient temperature. The resulting coating is soft, tacky, and swelled but not dissolved by, methylene chloride.

Example 17

a) A pre-dried 3 liter, 4-neck, round-bottomed flask is fitted with a thermometer, a "Thermowatch" (i.e., a thermostat control), a nitrogen inlet, a heating mantle atop a pot lifter, a 1000 ml pressure-equalizing addition funnel, a water-cooled condenser, a mechanical stirrer. The flask is charged with 236 g xylene, 32 g methanol (1.0 mol), and 25.2 g potassium t-butoxide (0.22 mol) and warmed to 60°C. At 60°C a mixture of 152.0 g butyl methacrylate (1.07 mol) and 455.8 g methyl methacrylate (4.56 mol) is added dropwise. Little external heating is necessary to maintain the temperature of the reaction mixture between 65—70°C. A mild exotherm occurs during the monomer addition. Approximately one hour after addition of monomers is completed, a sample is removed, quenched with a few drops of trifluoroacetic acid and analyzed by glc. Only a few percent residual monomer is observed by this method of analysis. Addition of a mixture consisting of 236 g xylene, 152.0 g BMA (1.07 mol) and 455.8 g MMA (4.56 mol) is made at a rate which sustains a mild exotherm (temperature is maintained at 70°C with but little external heating). Approximately one hour after addition of the monomer mixture is completed a sample of the orange liquid obtained shows essentially no residual monomer by glc analysis. The product (1745 g at 72% solids), upon analysis by gel permeation chromatography, has a $\bar{M}_w$ of 1440 and $\bar{M}_n$ of 1220, with $\bar{M}_w/\bar{M}_n$ equal to 1.18.

b) A one-liter, four-necked, round-bottomed flask equipped with an addition funnel, a mechanical stirrer, a thermometer, a "Thermowatch", an oil batch utilized with a pot lifter, and a variable take-off distillation head is charged with 6.08.8 g (3.98 mols, 72% solids in xylene) of the co-oligomer of 75% methyl methacrylate (MMA) and 25% butyl methacrylate (BMA) prepared in part a), 82.6 g (0.80 mol of diethylenetriamine (DETA) and 44.0 g (8.4 wt. percent on solids) of butyl Cellosolve (BC). The reaction mixture is brought to 140°C with a pre-heated oil batch. This temperature is then maintained by removal of solvent and by-products during the course of the reaction. Xylene is added whenever necessary to keep the viscosity of the mixture within reasonable limits. When the loss of amine titer reaches 35—40% of the initial charge (13 hours), heating is terminated. The oil bath is removed and xylene is distilled under reduced pressure [above 100 Torr (mm Hg)] as the temperature of the mixture drops from 140° to 80°C. When the solids content of the reaction mixture reaches 85—90%, water (about 550 g) is added gradually at 80°C. The product is recovered as an aqueous solution with the following specifications (the low molecular weight polyamine therein having an amido functionality of about 2.4):

| | |
|---|---|
| Solids | 40.8% |
| Viscosity (Brookfield, spindle 4, 6 RPM, 25°C) | 210 Ns/m$^2$ |
| Amine Equivalent Weight | 877 |
| Total Titer | 1.82 meq/g |
| Acid Number | 38.1 |

c) *Coatings*

1) To 7.5 g of the polymer solution obtained in part b), there is added 1.0 g of trimethylolpropane triacrylate and 1.0 g of butyl Cellosolve whereby a clear, homogeneous solution is produced. Thin films of this solution are cast in aluminum weighing dishes. After two hours at ambient temperature clear, soft, non-tacky films formed. After aging for one hour at 60°C and one hour at 100°C a hard, tough film is produced which is insoluble in methylene chloride and water. The film remains clear after 5 days immersion in water at ambient temperature.

2) To 9.2 g of the part b) product there is added 1.0 g of butyl Cellosolve and 1.0 g of neopentyl diacrylate. A clear, homogeneous solution results which yields a clear, tack-free coating after one hour at ambient temperature when cast as a thin film in an aluminum weighing dish. After curing for 1 hour at 60°C and 1 hr. at 100°C a clear somewhat brittle film is obtained which is insoluble in methylene chloride.

3) To 20.0 g of the part b) product there is added 4.0 g of butyl Cellosolve and 4.5 g of a 50% solution of trimethylolpropane triacrylate dissolved in butyl Cellosolve. The resulting clear solution is cast as a 152 micrometres wet film on Bonderite 1000 steel. After curing for 1 week at ambient temperature, the coating obtained has a KHN of 11.5 and a pencil hardness of 2H, is swelled but not dissolved by methylene chloride, and shows good resistance to both acetone and toluene.

Example 18

a) A mixture of 304.4 g of the oligomer of 75 methyl methacrylate/25 butyl methacrylate obtained in Example 14 a), 46.5 of hexamethylenediamine (HD), 22 g of butyl Cellosolve and 20 g of toluene is heated at 135°C for 21 hours; solvent is removed by distillation to maintain reaction temperature, and an additional 22 g of butyl Cellosolve, 23.2 g of ethylene glycol and 70 g of xylene are added during the course of the reaction to reduce product viscosity. The product, which may be diluted with water, has a solids content of 58.8%, a calculated amido functionality of 2.4, and an amine nitrogen titer of 1.70 meq/g.

b) To 14.0 g of amidated polymer solution obtained in part a) there is added 2.0 g of acetone, 2.0 g of butyl Cellosolve, and 4.48 g of a 50% solution of trimethylolpropane triacrylate. After mixing for 10 minutes, the solution is coated as a 152 micrometres wet film on Bonderite 1000 steel panels.

After drying for one week under ambient conditions a clear, glossy coating with a KHN of 0.9 and a pencil hardness of F is obtained. When this coating is heated for 24 hours at 60°C (140°F) the pencil hardness increases to 2H. The coating swells but does not dissolve in methylene chloride after one week ambient curing.

Example 19

a) *Alpha-Olefin/EA/BA Co-Poligomer*

To a 2-liter stirred Parr autoclave there is added 560 grams of propylene trimer; the reactor is sealed and sparged with nitrogen and heated to 190°C where the pressure becomes 2,7 bar. The gradual addition of a mixture of 120 g of ethyl acrylate, 120 g of n-butyl acrylate and 1.2 g of cumene hydroperoxide is started at constant rate. The addition is completed over a period of 4 hours at the end of which time the temperature is 220°C and the pressure 8,0 bar. The reactor is heated an additional 1.0 hr. at 190 ± 5°C and then cooled. The reaction product is stripped of unreacted monomers at a pot temperature of 50—100°C/5—10 Torr of low molecular weight volatiles at a pot temperature of 210°/0.1—5 Torr. The undistilled residual product, 200 grams yield, is used without further purification.

b) *Amidation*

To 525.0 g of the copoligomer product obtained in part a) there is added 525.0 g of butyl Cellosolve and 252.4 g of ethylenediamine. The solution is heated at 115°C for 33 hours, and then stripped under reduced pressure (~0,013 bar) to remove 300 g of solvent. An additional quantity of 500 g of butyl Cellosolve is added, and the resulting solution is again stripped under reduced pressure until a solution containing 85.9% solids is obtained. The amber solution obtained has an amine titer of 3.57 ME/g based upon solids, and contains about 0.33% residual ethylenediamine by gas chromatography.

c) *Coating System*

To 5.0 g of amidated product obtained in part b) there is added 5 g of butyl Cellosolve and 2.0 g of acetone and the mixture is stirred until a homogeneous solution results. To this solution is added 7.31 g of a solution of 7.50 g of Actomer X—80 dissolved in 2.50 g of butyl Cellosolve. After stirring for 5 minutes 152 μm wet film is cast on a Bonderite 1000 test panel. After curing for 3 days at ambient temperature (~23°C) the coating has a KHN of 4.85, a reverse impact resistance of greater than 18,0 N is swelled but not dissolved by methylene chloride, and is moderately resistant to a 10% aqueous acetic acid solution.

Example 20

a) *Preparation of Poly(Styrene/MA//82.9/17.1)*

To 1076 g of 2-butoxyethanol, heated to 136°C under a nitrogen atmosphere, with rapid stirring, is added a solution of 2080 g of styrene, 430 g of methyl acrylate, and 107 g of t-BP (75% solution in mineral spirits) over a period of 3 hours.

When the addition is complete, the solution is held at a temperature of 136°C for 1 hour, then an additional 10.8 g of 75% t-BP is added, and heating at 136°C continued for 1 hour before cooling.

The resulting solution is clear and contains 69.9% solids (2 hours/125°C). Gel permeation chromatography (GPC) shows $\bar{M}_n$ 4,600; $\bar{M}_w$ 13,900. When diluted to 50% solids with 2-butoxyethanol the viscosity is 16,4 Ns/m².

b) *Amidation with EDA*

To 2200 g of the solution obtained in part a) there is added 880 g of 2-butoxyethanol and 430.5 g of ethylene diamine. The resulting solution is heated at 136°C for 120 hours and then cooled to 90°C and vacuum distilled as described in Example 1 b) to remove residual ethylene diamine to produce a clear, light amber colored solution at 48.5% solids having an amine titer of 1.46 ME/g, and a viscosity of 96,2 Ns/m².

c) *Conversion of the Amidated Copolymer in Part b) to a Polyimine by Reaction with Ethyl Amyl Ketone*

To 2960 g of the amidated copolymer prepared in part b) there is added 538 g of ethyl amyl ketone (5-methyl-3-heptanone) and 600 g of cyclohexane. The solution is heated at reflux (94°C) for 4.5 hours, during which time 19 ml of water is azeotropically distilled and collected by means of a Dean-Stark trap between the flask and condenser. Practically all of the primary amine groups are converted to imine groups.

The solution is then distilled under vacuum (100°C/10 mm) to remove cyclohexane and unreacted ketone. Then, 134.5 g of ethyl amyl ketone is added to the solution, which contains 48.5% solids, has an amine titer of 1.46 ME/g, and a viscosity of 58,5 Ns/m².

d) *Coating Prepared from the Polyimine (Part c) and a Polyacrylate*

1) To 100.0 g of Actomer X—80$^R$ there is added 100.0 g of xylene, 200.0 g of titanium dioxide pigment and 200.0 g of sand. After grinding for 0.5 hours, the sand is removed by filtration.

2) An enamel is prepared by the formulation:

| Component | Parts |
|---|---|
| Sand mill grind | 100.0 |
| Polyimine (Part c) | 137.1 |
| Actomer X—80$^R$ | 25.5 |
| Xylene | 129.5 |
| Ethyl Amyl Ketone | 24.2 |
| Baysilone (flow and leveling agent) | 0.16 |
| 2-butoxyethanol | 0.4 |
| Enamel solids | 40% by weight |
| Pigment/Binder Ratio | 30/70 |
| Viscosity (#4 Ford cup) | ~18 sec |
| Usable Pot Life | ca. 5 hours |
| Set Time | ca. 30 minutes |
| Tack-free Time | ca. 90 minutes |

e) *Properties of Spray-Applied Coating at 38 μm on Bonderite[R] 1000 After 7 Days Air-Dry at Ambient Temperature and Relative Humidity (45%)*

| | |
|---|---|
| Knoop Hardness | 7 |
| Flexibility (3 mm Mandrel) | pass |
| Reverse Impact | 0,23 kpm |
| Print Resistance 0,13 bar/1 hr 60°C | lt,-med. |
| *Chemical Resistance* (1/2 hr Patch Tests) | |
| Acetic Acid (10% in $H_2O$) | 2H—B* |
| NaOH (10% in $H_2O$) | 2H—2H |
| Gasoline | 2H—H* |
| Xylene | 2H—6B* |
| Ethanol | 2H—6B* |

* Hardness recovers after evaporation of solvent.

*Weather-O-Meter* (1500 hours)

% Gloss Retention 60°/20° 96/90$^+$

Example 21

a) *Preparation of Poly(styrene/MA//78.4/21.6)*

The procedure described in part a) of previous example 20 is repeated using 1076 g of 2-butoxyethanol, 1968 g of styrene, 542 g of methyl acrylate, an initial charge of 179.3 g of 75% t-BP, and a final charge of 17.9 g thereof. The polymerization temperature is 145°C and the monomer feed time 3.0 hours. The resulting solution is clear, contains 71.1% solids, has a viscosity of 854 Ns/m² and $\overline{M}_w$ and $\overline{M}_n$, determined by GPC are 6,290 and 2,500, respectively.

b) *Amidation*

A solution of 1700 g of the copolymer solution prepared in part a), 680 g of 2-butoxyethanol and 340.7 g of ethylene diamine is heated for 25 hours at 154°C, and then vacuum distilled as previously described to remove excess ethylene diamine.

The final solution contains 55.2% solids, has an amine titer of 1.29 ME/g, and a viscosity of 136 Ns/m².

c) *Conversion of the Amidated Copolymer to a Polyimine*

To 2260 g of the amidated resin prepared in part b) there is added 418.3 g of ethyl amyl ketone (EAK) and 226.0 g of cyclohexane. The solution is heated at reflux for 10.3 hours during which time 13.7 g of water is collected by means of a Dean-Stark trap. The final solution, after vacuum distillation of cyclohexane and excess ethyl amyl ketone and readdition of 104.5 g of the latter, is clear, red-amber in color, contains 56.7% solids, has a viscosity of 135,2 Ns/m² and an amine titer of 1.28 ME/g. Essentially all of the primary amine groups of the EDA-amination product of part b) are converted to EAK-imine groups.

d) *Clear Coating of the Polyimine with a Polyacrylate*

A solution is prepared by mixing 102 g of the polyimine prepared in part c) with 84 g of a 50% by weight solution of Actomer X—80 dissolved in xylene. This solution is coated on Bonderite 1000 and after 7 days drying under ambient conditions of temperature and humidity (25°C and 40—60% R.H.) yields a clear film with a Knoop Hardness of 4.6, a pencil hardness of 2H, and a reverse impact of 15.8 J (140 in.-lb). The coating is resistant to common solvents.

Example 22

a) *Preparation of Poly(Styrene/Butyl Acrylate//70.9/29.1)*

The procedure described in part a) of example 21 is repeated using 1076 g of 2-butoxyethanol, 1780 g of styrene, 730 g of butyl acrylate (BA), an initial charge of 179.2 g of t-BP (75% in mineral

spirits) and a final charge of 17.9 g thereof, a monomer feed time of 4.5 hours and a polymerization temperature of 150°C.

The resulting solution is clear, contained 72.9% solids, had a viscosity of 140 $Ns/m^2$ and $\bar{M}_w$ and $\bar{M}_n$ of 5980 and 2420, respectively.

b) *Amidation*

A solution of 1677 g of the copolymer solution prepared in part a), 671 g of 2-butoxyethanol and 304 g of ethylene diamine, is heated for 24 hours at 155°C and then for 48 hours at 170°C. Excess diamine is then removed by vacuum distillation as previously described. The final solution contains 58.5% solids, has an amine titer of 0.51 ME/g, is reddish brown in color, and has a viscosity of 15,5 $Ns/m^2$.

c) *Conversion of the Amidated Copolymer to a Polyimine*

To 2026 g of the amidated copolymer prepared in part b) there is added 203 g of cyclohexane and 155.6 g of ethyl amyl ketone. The solution is heated at reflux for 16 hrs., during which time 1.2 ml of water is collected by means of a Dean-Stark trap. The final solution, after vacuum distillation of cyclohexane and excess ethyl amyl ketone and readdition of 8.6 g of the latter, is clear, reddish brown in color, contains 0.51 ME/g amine, and has a viscosity of 15,5 $Ns/m^2$.

d) *Coating Prepared from the Polyimine of Part c) with a Polyacrylate*

A coating composition is prepared as described in Example 21 d) substituting the polyimine obtained in part c) hereof for that used in Example 21 d) and applied to cold-rolled panels at ambient conditions of temperature (25°C) and relative humidity (20% to 50% R.H.). The resulting 76 micrometres thick coatings air-dried to produce a clear film having properties similar to those obtained in Example 21 d).

Example 23

Polyacrylated Styrene/Glycidyl Methacrylate Copolymer

a) *Styrene/Glycidyl Methacrylate Copolymer*

To 1800 g of refluxing xylene, sparged with nitrogen there is added dropwise over a period of 3 hours, a solution of 1418 g of styrene, 382 g of glycidyl methacrylate, and 51.4 g of t-BP (75% in mineral spirits). Then, an additional charge of 5.1 g of 75% t-BP is added, and heating at reflux is continued for 1 hour before cooling to room temperature. A sparkling clear and colorless polymer solution containing 50.1% solids, having a viscosity of 1,02 $Ns/m^2$ and an $\bar{M}_w$ and $\bar{M}_n$ determined by GPC of $1.29 \times 10^4$ and $3.75 \times 10^2$, respectively, is obtained.

b) *Addition of Acrylic Acid to the Styrene/Glycidyl Methacrylate Copolymer*

To 3600 g of the polymer solution prepared in part a) there is added 302 g of acrylic acid. Air is slowly bubbled through the solution while it is heated on a steam bath to maintain a pot temperature of 90°C for a period of 27.5 hrs. The initial solution titer of 1.075 ME/g after 27.5 hrs. is reduced to 0.446 ME/g. Thus, 0.629 ME/g of acrylic acid is consumed by reaction with glycidyl epoxide groups in the copolymer.

The solution is distilled under vacuum (20—30 mm) to remove residual acrylic acid by codistillation with xylene. A total of 3200 g of xylene is added and distilled. The total distillate weighing 3644 g contains 98.5 g of acrylic acid by titration. The residual polymer solution weighs 3250 g and contains 15.0 g of free acrylic acid. The total acrylic acid consumed is 188.5 g. The calculated equivalents of acryloxy

$$(CH_2=CH-\overset{\overset{\large O}{\|}}{C}-O-)$$

pendant and/or terminal groups in the polyacrylate copolymer solution is therefore 0.806 ME/g.

Example 24

a) *Copolymer of Styrene and the Diisopropyl Ketone Imine of 2-Aminoethyl Methacrylate (U.S. Patent 3,037,969)*

A stream of dry nitrogen is bubbled thru 135 g of xylene as it is heated with stirring to reflux. To the hot solvent is added over a period of 3.75 hours a mixture of 78.0 g (0.25 mol) of styrene and 54.8 g (0.25 mol) of 2-diisopropyl ketiminoethyl methacrylate containing 3.5 g of 75% t-BP. The slow nitrogen flow through the mixture is continued at the mixture is refluxed another half hour, treated with an additional 0.4 g of 75% t-BP in 0.4 g xylene, and refluxed another half hour. The resulting hazy poligomer solution has 49.3% solids (2 hr. at 125°C) and contains 0.906 meq N/g (1.81 meq NH/g) by titration with 0.1N $HClO_4$ in HOAc.

b) *Coatings*

1) To 5.0 g (9.05 meq NH) of the poligomer solution obtained in part a) is added 4.9 g (9.05 meq C = C) of a 50% solution of a diacrylate ester of a liquid Bisphenol A epoxy resin in butyl Carbitol.

2) To 10.0 g (18.1 meq NH) of the poligomer solution obtained in part a) is added 3.9 g (18.1 meq C = C) of a diacrylate ester of ethoxylated Bisphenol A epoxy resin.

3) To 2.0 g (3.62 meq NH) of the poligomer solution of part a) is added 8.7 g (3.61 meq C = C) of a solution of acrylated glycidyl methacrylate/styrene copolymer obtained in Example 23 b).

All of the above air-cure (at ambient conditions of temperature and humidity, e.g. 25°C and 50—70% R.H.) to clear, hard, tough crosslinked films which are not affected by half hour exposure to 10% acetic acid or 10% sodium hydroxide.

Example 25

a) The primary amine groups in the amidation products obtained in Examples 1 b), 2 b), 7 b), 7 c), 13 b), 16 b), 19 b), 20 b), 21 b) and 22 b) are converted to diisopropyl ketimine groups by adding an excess of diisopropyl ketone to each of the amidation products, based on their respective amine titer, along with cyclohexane as a solvent, generally using the procedure described in Example 20 c).

b) Coating compositions are prepared by (1) each of the imine products obtained in part a) hereof with (2) the acrylic acid product of an epoxidized linseed oil containing an average of about 2.2 vic-epoxy groups per molecule, substantially all of such groups being reacted with acrylic acid to form a polyacryloxy compound having an average of at least two unsaturated acryloxy groups therein, in (3) 2-butoxyethanol or other solvent.

c) The coating compositions are stored in anhydrous conditions until they are applied on the surfaces to be coated. They are formed into films of about 76 μm (micrometres) thickness at ambient conditions of about 20 to 25°C, and about 50 to 90% R.H. The cured films are comparable in properties to those obtained from the corresponding primary amine containing amidation products.

From this application a divisional application has been divided out which is bearing the file No. 81 100 735.0.

## Claims

1. A coating and/or impregnation in the form of a protective and/or decorative film, a binder for fibrous webs forming a bonded non-woven fabric, or an adhesive, characterised in that said coating and/or impregnation is formed from a coating and/or impregnating composition comprising:

(1) at least one vinyl addition polymer containing a plurality of primary or secondary amine groups or aldimine or ketimine groups pendant to units in the polymer chain;

(2) at least one material containing at least two acryloxy or methacryloxy groups of the formula:

$$H_2C = C(R)C(O)—O—$$

where R is H or $CH_3$;

(3) optionally, at least one volatile ketone or aldehyde stabiliser containing from 3 to 10 carbon atoms; and

(4) optionally, at least one monoethylenically unsaturated compound of the formula:

$$H_2C = C(R)X$$

where R is H or $CH_3$ and X is an electron withdrawing group.

2. A coating and/or impregnation as claimed in Claim 1, characterised in that polymer (1) contains units of monomer having at least one of the following formulae:

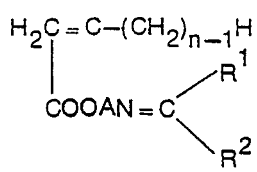

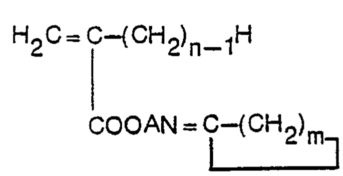

and

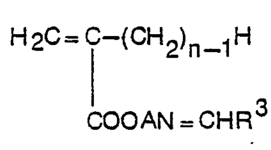

where

m is an integer having a value of 4 to 5,

n is 1 or 2,

A is a $C_2$—$C_{12}$ alkylene group,

$R^1$ is a $(C_1$—$C_{12})$alkyl or a cycloalkyl group,

$R^2$ is a $(C_1$—$C_{12})$alkyl or a cycloalkyl group, and

$R^3$ is phenyl, halophenyl or alkoxyphenyl in which the alkoxy group has one to four carbon atoms,

and

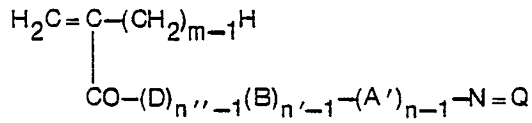

wherein:

Q is selected from the group consisting of

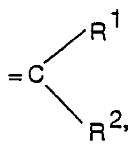 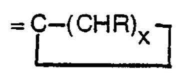 and $=CHR_3$

R is H or it may be methyl in one CHR unit,

$R^1$ is $(C_1$—$C_{12})$ alkyl or a cyclohexyl group,

$R^2$ is $(C_1$—$C_{12})$ alkyl or a cyclohexyl group,

$R^3$ is phenyl, halophenyl, $(C_1$—$C_{12})$alkyl, cyclohexyl or $(C_1$—$C_4)$alkoxyphenyl,

A′, B, and D are the same or different oxyalkylene groups having the formula

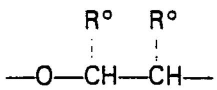

R° are the same or different and are H or alkyl radical having 1 to 2 carbon atoms,

m is 1 or 2,

x is an integer having a value of 4 to 5,

n is an integer having a value of 1 to 200,

n′ is an integer having a value of 1 to 200, and n″ is an integer having a value of 1 to 200, the sum of n-1, n′-1, and n″-1 having a value of 2 to 200.

3. A coating and/or impregnation as claimed in Claim 1, characterised in that polymer (1) is prepared by reacting polymer containing a plurality of primary or secondary amine groups with volatile ketone or aldehyde containing from 3 to 10 carbon atoms.

4. A coating and/or impregnation as claimed in Claim 1 or 3, characterised in that the polymer containing amine groups is prepared by the aminolysis of polymer containing units of at least one $C_1$—$C_4$ alkyl acrylate and/or methacrylate with at least one polyamine containing at least two amino groups selected from primary and secondary amino groups and having their nitrogen atoms attached to aliphatic carbon atoms.

5. A coating and/or impregnation as claimed in Claim 4, characterised in that the polyamine has the formula:

$$H_2N—R°—(NHR°)_n—NH_2$$

wherein R° is an alkylene group containing 2 or 3 carbon atoms and n is 0, 1, 2 or 3.

6. A coating and/or impregnation as claimed in Claim 5, characterised in that the polyamine is 1,3-propylenediamine.

7. A coating and/or impregnation as claimed in Claim 4, characterised in that the polyamine is ethylenediamine and the amine polymer contains units of the formula:

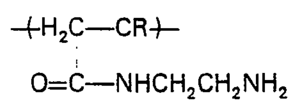

wherein R is H or $CH_3$.

8. A coating and/or impregnation as claimed in any of Claims 1 to 7, characterised in that polymer (1) has a number average molecular weight of from 600 to 5000.

9. A coating and/or impregnation as claimed in any of Claims 1 to 8, characterised in that component (2) comprises at least one of: ethylene glycol diacrylate, diethylene glycol diacrylate, propylene glycol diacrylate, trimethylene glycol diacrylate, neopentyl glycol diacrylate, 1,3-butylene

glycol diacrylate, 1,4-butylene glycol diacrylate, 1,6-hexamethylene glycol diacrylate, 1,10-decamethylene glycol diacrylate, trimethylolpropane triacrylate, pentaerythritol tetraacrylate, and pentaerythritol triacrylate.

10. A coating and/or impregnation as claimed in any of Claims 1 to 8, characterised in that component (2) comprises at least one of:

(a) a simple ester obtained by the reaction of a polyol having at least two hydroxyl groups with acrylic acid or methacrylic acid, preferably trimethylolpropane triacrylate or a poly(200)ethylene glycol dimethacrylate;

(b) a urethane acrylate and/or methacrylate obtained by reacting at least two isocyanate groups of a polyisocyanate with a hydroxyalkyl acrylate and/or methacrylate;

(c) a polyester having at least two acrylate and/or methacrylate groups obtained by esterifying hydroxy groups with acrylic and/or methacrylic acid;

(d) a polyfunctional acrylate and/or methacrylate obtained by reaction of a hydroxyalkyl acrylate and/or methacrylate with (i) a dicarboxylic acid having 4 to 15 carbon atoms, (ii) a polyepoxide having terminal glycidyl groups, or (iii) a polyisocyanate having terminal reactive isocyanate groups;

(e) an acrylate and/or methacrylate terminated polyester made from acrylic acid and/or methacrylic acid, a polyol having at least three hydroxyl groups, and a dicarboxylic acid;

(f) a polyfunctional acrylate and/or methacrylate obtained by the reaction of acrylic and/or methacrylic acid with at least 2 epoxy groups of an epoxidized drying oil, or epoxidized drying oil fatty acid ester, or amide thereof, or a corresponding alcohol, containing at least two epoxy groups;

(g) a urethane derivative or amine derivative of a polyfunctional acrylate and/or methacrylate of (f) above obtained by the reaction of an isocyanate or amine respectively with the polyfunctional acrylate and/or methacrylate while retaining at least two acrylate and/or methacrylate groups therein;

(h) an acrylic acid adduct to an epoxidized vegetable or animal oil having ten or more carbon atoms in the fatty acid component and sufficient unsaturation to provide at least two epoxy groups in the epoxidized oil, preferably wherein the oil is soybean oil or linseed oil;

(i) a polyacrylate and/or methacrylate obtained by the reaction of acrylic and/or methacrylic acid by addition to the epoxy groups of an aromatic bisphenol-based epoxy resin; preferably a diacrylate ester of a liquid bisphenol A epoxy resin;

(j) a polyacrylate and/or methacrylate obtained by the addition of acrylic acid or methacrylic acid to a liquid vinyl polymer having pendant glycidyl groups resulting from addition polymerization of a monomer mixture comprising glycidyl acrylate and/or methacrylate, glycidyl vinyl ether or glycidyl vinyl sulfide;

(k) a polyfunctional acrylate and/or methacrylate derived from acrylic acid anhydride or methacrylic acid anhydride and a polyepoxide;

(l) a polyfunctional acrylate and/or methacrylate urethane ester obtained from the combining of a hydroxyalkyl acrylate and/or methacrylate, a diisocyanate, and a hydroxy functional alkyd condensate;

(m) an acrylate and/or methacrylate terminated polyester obtained by the reaction of a polycaptrolactone diol or triol with a diisocyanate, and a hydroxyalkyl acrylate and/or methacrylate and a urethane polyacrylate and/or methacrylate obtained by the reaction of a hydroxyl-containing ester of a polyol with acrylic and/or methacrylic acid and a polyisocyanate.

11. A coating and/or impregnation as claimed in any of claims 1 to 10, characterised in that the relative amount of component (2) to component (1) in the composition, based respectively on acryloxy and methacryloxy unsaturation equivalency of (2) and primary and secondary amine nitrogen equivalency of (1), is such as to provide from 0.5 to 3.5 equivalents of (2) for each equivalent of (1).

12. A coating and/or impregnation as claimed in any preceding claim, characterised in that component (3) comprises ethyl amyl ketone or diisopropyl ketone.

13. A coating and/or impregnation as claimed in any preceding claim, characterised in that component (4) comprises at least one compound of the formula:

$$CH_2 = C(R)X$$

wherein R is H or $CH_3$ and X is CN, $CONR^2R^3$ or $COOR^4$, wherein $R^2$ is H or $C_1$—$C_{20}$ alkyl, $R^3$ is H or $C_1$—$C_{20}$ alkyl and $R^4$ is $C_1$—$C_{20}$ alkyl which may be substituted with halogen atoms.

14. A coating and/or impregnation as claimed in Claim 1, characterised in that component (1) is a vinyl addition polymer containing amine groups at least some of which are at least partially blocked by reaction thereof with isobornyl acrylate, the amount of isobornyl acrylate being sufficient to reduce the amount of active hydrogen atoms on the primary or secondary amine groups of the amine-containing polymer but not so great as to eliminate so many of such hydrogen atoms as to preclude adequate addition of component (1) across the double bonds of component (2) to crosslink the composition to the extent necessary to provide the desired mechanical and resistance properties in the cured products.

15. A coating and/or impregnation as claimed in Claim 1, characterised in that component (4) comprises at least one compound containing a single acryloxy or methacryloxy group.

16. A coating and/or impregnation as claimed in Claim 2, characterised in that component (1) is a copolymer of diisopropylketiminoethyl methacrylate.

17. A coating and/or impregnation as claimed in Claim 16, characterised in that component (2) is a diacrylate ester of a liquid epoxy resin.

18. A coating and/or impregnation as claimed in Claim 16, characterised in that component (2) is an acrylated glycidyl methacrylate/styrene copolymer having at least two unsaturated acryloxy groups.

19. A coating and/or impregnation as claimed in Claim 1, characterised in that said coating and/or impregnating composition is substantially anhydrous and component (1) is a ketimine-containing amidation product of a vinyl addition copolymer containing units of at least one $C_1$—$C_4$ alkyl acrylate and/or methacrylate with an aliphatic polyamine having at least two primary amine groups, substantially all of the primary amine groups in the amidation product having been converted into ketimine groups by reaction with an aliphatic or alicyclic $C_3$ to $C_{10}$ ketone with removal of the water liberated by that reaction, whereby the composition is hydrocurable when applied to surfaces of a substrate for coating, adhering or sealing thereof under ambient conditions of temperature (20—25°C) and relative humidity of at least 20%.

20. A coating and/or impregnation as claimed in Claim 19, characterised in that the polyamine is ethylenediamine and the ketone is diisopropyl ketone.

21. A coating and/or impregnation as claimed in Claim 19, characterised in that the polyamine is ethylenediamine and the ketone is ethylamyl ketone.

22. A method of forming on a substrate a coating and/or impregnation as claimed in any preceding claim from the coating and/or impregnating composition as described in any of said claims, characterised in that said composition is applied to the substrate and cured under ambient temperature conditions, optionally with heating to accelerate the cure.

23. A method as claimed in Claim 22, characterised in that said composition is formed from a two package system, one package containing component (1), the other package containing component (2) and polymerisation inhibitor, the method comprising the additional step of mixing the two packages before application to the substrate.

24. A method as claimed in Claim 23, characterised in that component (4) is present in one or both packages, the package containing component (1) optionally further comprising polymerisation inhibitor when that package contains a compound of component (4).

**Patentansprüche**

1. Beschichtung und/oder Imprägnierung in Form eines schützenden und/oder dekorativen Films, eines Bindemittels für faserartige Bahnen, die ein gebundenes Vliesmaterial bilden, oder eines Klebstoffs, dadurch gekennzeichnet, daß die Beschichtung und/oder die Imprägnierung gebildet wird aus einer Beschichtungs- und/oder Imprägnierungsmasse aus

(1) wenigstens einem Vinyladditionspolymeren, das eine Vielzahl primärer oder sekundärer Amingruppen oder Aldimin- oder Ketimingruppen, die an Einheiten in der Polymerkette hängen,

(2) wenigstens einem Material, das wenigstens Acryloxy- oder Methacryloxygruppen der Formel

$$H_2C = C(R)C(O)—O—$$

enthält, worin R für H oder $CH_3$ steht,

(3) gegebenenfalls wenigstens einem flüchtigen Keton- oder Aldehyd-Stabilisierungsmittel, das 3 bis 10 Kohlenstoffatome enthält und

(4) gegebenenfalls wenigstens einer monoethylenisch ungesättigten Verbindung der Formel

$$H_2C = C(R)X,$$

worin R für H oder $CH_3$ steht und X eine Elektronen abziehende Gruppe bedeutet.

2. Beschichtung und/oder Imprägnierung nach Anspruch 1, dadurch gekennzeichnet, daß das Polymere (1) Einheiten eines Monomeren wenigstens einer der folgenden Formeln

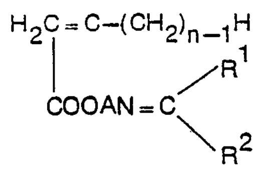

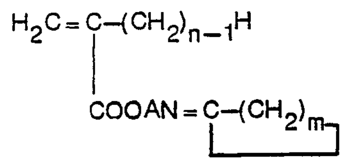

und

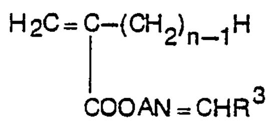

enthält, worin

m für eine ganze Zahl mit einem Wert von 4 bis 5 steht,
n 1 oder 2 bedeutet,
A eine $C_2$—$C_{12}$-alkylengruppe bedeutet,
$R^1$ eine ($C_1$—$C_{12}$)Alkylgruppe oder eine Cycloalkylgruppe bedeutet,
$R^2$ eine ($C_1$—$C_{12}$)Alkylgruppe oder eine Cycloalkylgruppe darstellt und
$R^3$ Phenyl, Halogenphenyl oder Alkoxyphenyl ist, wobei die Alkoxygruppe 1 bis 4 Kohlenstoffatome aufweist, und

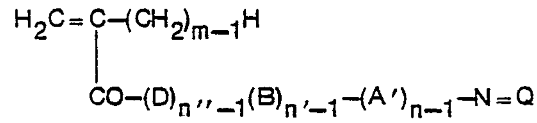

worin
Q aus der Gruppe ausgewählt wird, die aus

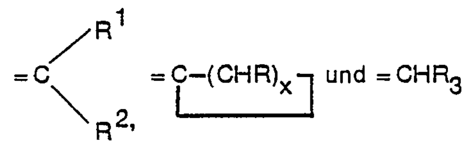

besteht,
R H ist oder Methyl in einer CHR-Einheit bedeuten kann,
$R^1$ eine ($C_1$—$C_{12}$)Alkylgruppe oder eine Cyclohexylgruppe darstellt,
$R^2$ eine ($C_1$—$C_{12}$)Alkylgruppe oder eine Cyclohexylgruppe ist,
$R^3$ Phenyl, Halogenphenyl, ($C_1$—$C_{12}$)Alkyl, Cyclohexyl oder ($C_1$—$C_4$)Alkoxyphenyl bedeutet,
A′, B und D gleiche oder verschiedene Oxyalkylengruppen der Formel

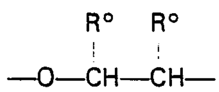

sind,
R° gleich oder verschieden sind und für H oder Alkylreste mit 1 bis 2 Kohlenstoffatome stehen,
m 1 oder 2 ist,
x eine ganze Zahl mit einem Wert von 4 bis 5 bedeutet,
n eine ganze Zahl mit einem Wert von 1 bis 200 ist,
n′ eine ganze Zahl mit einem Wert von 1 bis 2 ist und n″ eine ganze Zahl mit einem Wert von 1 bis 200 ist, wobei die Summe von n-1, n′-1 und n″-1 einen Wert von 2 bis 200 darstellt.

3. Beschichtung und/oder Imprägnierung nach Anspruch 1, dadurch gekennzeichnet, daß das Polymere (1) hergestellt wird durch Umsetzung eines Polymeren, das eine Vielzahl von primären oder sekundären Amingruppen enthält, mit einem flüchtigen Keton oder Aldehyd, das 3 bis 10 Kohlenstoffatome enthält.

4. Beschichtung und/oder Imprägnierung nach Anspruch 1 oder 3, dadurch gekennzeichnet, daß das Polymere, das Amingruppen enthält, hergestellt wird durch Aminolyse des Polymeren, das Einheiten wenigstens eines $C_1$—$C_4$-Alkylacrylats und/oder -Methacrylats enthält, mit wenigstens einem Polyamin, das wenigstens zwei Aminogruppen enthält, ausgewählt aus primären und sekundären Aminogruppen, wobei ihre Stickstoffatome mit aliphatischen Kohlenstoffatomen verknüpft sind.

5. Beschichtung und/oder Imprägnierung nach Anspruch 4, dadurch gekennzeichnet, daß das Polyamin der Formel

$$H_2N—R°—(NHR°)_n—NH_2$$

entspricht, worin R° eine Alkylengruppe mit 2 oder 3 Kohlenstoffatomen darstellt und n 0, 1, 2 oder 3 ist.

6. Beschichtung und/oder Imprägnierung nach Anspruch 5, dadurch gekennzeichnet, daß das Polyamin aus 1,3-Propylendiamin besteht.

7. Beschichtung und/oder Imprägnierung nach Anspruch 4, dadurch gekennzeichnet, daß das Polyamin aus Ethylendiamin besteht und das Aminpolymere Einheiten der Formel

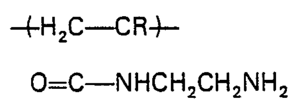

enthält, worin R für H oder $CH_3$ steht.

8. Beschichtung und/oder Imprägnierung nach einem der Ansprüche 1 bis 7, dadurch gekennzeichnet, daß das Polymere (1) ein Zahlenmittel des Molekulargewichts von 600 bis 5000 besitzt.

9. Beschichtung und/oder Imprägnierung nach einem der Ansprüche 1 bis 8, dadurch gekennzeichnet, daß die Komponente (2) aus wenigstens einer der folgenden Verbindungen besteht: Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykoldiacrylat, Trimethylolpropantriacrylat, Pentaerythrittetraacrylat sowie Pentaerythrittriacrylat.

10. Beschichtung und/oder Imprägnierung nach einem der Ansprüche 1 bis 8, dadurch gekennzeichnet, daß die Komponente (2) aus wenigstens einer der folgenden Verbindungen besteht:

(a) einem einfachen Ester, erhalten durch die Umsetzung eines Polyols mit wenigstens zwei Hydroxylgruppen mit Acrylsäure oder Methacrylsäure, vorzugsweise Trimethylolpropandiacrylat oder Poly(200)ethylenglykoldimethacrylat,

(b) einem Urethanacrylat und/oder -methacrylat, erhalten durch Umsetzung von wenigstens zwei Isocyanatgruppen eines Polyisocyanats mit Hydroxyalkylacrylat und/oder -methacrylat,

(c) einem Polyester mit wenigstens zwei Acrylat- und/oder Methacrylatgruppen, erhalten durch Veresterung von Hydroxygruppen mit Acrylsäure und/oder Methacrylsäure,

(d) einem polyfunktionellen Acrylat und/oder Methacrylat, erhalten durch Umsetzung eines Hydroxyalkylacrylats und/oder -methacrylats mit (i) einer Dicarbonsäure mit 4 bis 15 Kohlenstoffatomen, (ii) einem Polyepoxid mit endständigen Glycidylgruppen oder (iii) einem Polyisocyanat mit endständigen reaktiven Isocyanatgruppen,

(e) einem Acrylat- und/oder Methacrylat-terminierten Polyester aus Acrylsäure und/oder Methacrylsäure, einem Polyol mit wenigstens 3 Hydroxylgruppen und einer Dicarbonsäure, und

(f) einem polyfunktionellen Acrylat und/oder Methacrylat, erhalten durch Umsetzung von Acrylsäure und/oder Methacrylsäure mit wenigstens 2 Epoxygruppen eines epoxidierten trocknenden Öls oder eines epoxidierten trocknenden Ölfettsäureesters oder Amids davon, oder einem entsprechenden Alkohol, der wenigstens zwei Epoxygruppen enthält,

(g) einem Urethanderivat oder Aminderivat eines polyfunktionellen Acrylats und/oder Methacrylats von (f), erhalten durch Umsetzung eines Isocyanats bzw. eines Amins mit dem polyfunktionellen Acrylat und/oder Methacrylat, wobei wenigstens zwei Acrylat- und/oder Methacrylatgruppen zurückbleiben,

(h) einem Acrylsäureaddukt an ein epoxidiertes pflanzliches oder tierisches Öl mit 10 oder mehr Kohlenstoffatomen in der Fettsäurekomponente und einer Unsättigung, die dazu ausreicht, wenigstens zwei Epoxygruppen in dem epoxidierten Öl zur Verfügung zu stellen, vorzugsweise dann, wenn das Öl aus Sojabohnenöl oder Leinsamenöl besteht,

(i) einem Polyacrylat und/oder -methacrylat, erhalten durch Umsetzung von Acrylsäure und/oder Methacrylsäure durch Addition an die Epoxygruppen eines aromatischen Epoxyharzes auf Bisphenolbasis, vorzugsweise eines Diacrylatesters eines flüssigen Bisphenol-A-epoxyharzes,

(j) einem Polyacrylat und/oder -methacrylat, erhalten durch Addition von Acrylsäure oder Methacrylsäure an ein flüssiges Vinylpolymeres mit daran hängenden Glycidylgruppen, zurückgehend auf die Additionspolymerisation einer Monomermischung aus Glycidylacrylat und/oder -methacrylat, Glycidylvinylether oder Glycidylvinylsulfid,

(k) einem polyfunktionellen Acrylat und/oder Methacrylat, zurückgehend auf Acrylsäureanhydrid oder Methacrylsäureanhydrid und ein Polyepoxid,

(l) einem polyfunktionellen Acrylat- und/oder Methacrylat-Urethanester, erhalten durch Kombination eines Hydroxyalkylacrylats und/oder -methacrylats, eines Diisocyanats und eines hydroxyfunktionellen Alkydkondensats,

(m) einem Acrylat- und/oder Methacrylat-terminierten Polyester, erhalten durch Umsetzung eines Polycaprolactondiols oder -triols mit einem Diisocyanat und einem Hydroxyalkylacrylat und/oder -methylacrylat und einem Urethanpolyacrylat und/oder -methacrylat, erhalten durch Umsetzung eines Hydroxyl enthaltenden Esters eines Polyols mit Acrylsäure und/oder Methacrylsäure und einem Polyisocyanat.

11. Beschichtung und/oder Imprägnierung nach einem der Ansprüche 1 bis 10, dadurch gekennzeichnet, daß die relative Menge der Komponente (2) zu der Komponente (1) in der Masse, bezogen jeweils auf eine Acryloxy- und Methacryloxyunsättigungsäquivalenz von (2) und eine primäre und sekundäre Aminstickstoffäquivalenz von (1), derartig ist, daß 0,5 bis 3,5 Äquivalente (2) pro Äquivalent (1) zur Verfügung stehen.

12. Beschichtung und/oder Imprägnierung nach einem der vorhergehenden Ansprüche, dadurch gekennzeichnet, daß die Komponente (3) aus Ethylamylketon oder Diisopropylketon besteht.

13. Beschichtung und/oder Imprägnierung nach einem der vorhergehenden Ansprüche, dadurch gekennzeichnet, daß die Komponente (4) aus wenigstens einer Verbindung der Formel

$$CH_2 = C(R)X$$

besteht, worin R für H oder $CH_3$ steht und X CN, $CONR^2R^3$ oder $COOR^4$ ist, wobei $R^2$ H oder $C_1$—$C_{20}$-Alkyl bedeutet, $R^3$ H oder $C_1$—$C_{20}$-Alkyl ist und $R^4$ $C_1$—$C_{20}$-Alkyl ist, das mit Halogenatomen substituiert sein kann.

14. Beschichtung und/oder Imprägnierung nach Anspruch 1, dadurch gekennzeichnet, daß die Komponente (1) ein Vinyladditionspolymeres ist, das Amingruppen enthält, von denen wenigstens einige teilweise durch Umsetzung mit isobornylacrylat blockiert sind, wobei die Menge an Isobornylacrylat dazu ausreicht, die Menge an aktiven Wasserstoffatomen an den primären oder sekundären Amingruppen des Amin enthaltenden Polymeren herabzusetzen, nicht jedoch so hoch ist, daß viele derartiger Stickstoffatome beseitigt werden, um eine ausreichende Addition der Komponente (1) an die Doppelbindungen der Komponente (2) zur Vernetzung der Masse bis zu dem Ausmaß zu ermöglichen, das erforderlich ist, um die gewünschten mechanischen Eigenschaften und Widerstandseigenschaften in den gehärteten Produkten zu bewirken.

15. Beschichtung und/oder Imprägnierung nach Anspruch 1, dadurch gekennzeichnet, daß die Komponente (4) wenigstens eine Verbindung aufweist, die eine einzige Acryloxy- oder Methacryloxygruppe enthält.

16. Beschichtung und/oder Imprägnierung nach Anspruch 2, dadurch gekennzeichnet, daß die Komponente (1) ein Copolymeres von Diisopropylketiminoethylmethacrylat ist.

17. Beschichtung und/oder Imprägnierung nach Anspruch 16, dadurch gekennzeichnet, daß die Komponente (2) ein Diacrylatester eines flüssigen Epoxyharzes ist.

18. Beschichtung und/oder Imprägnierung nach Anspruch 16, dadurch gekennzeichnet, daß die Komponente (2) ein acryliertes Glycidylmethacrylat/Styrol-Copolymeres mit wenigstens zwei ungesättigten Acryloxygruppen ist.

19. Beschichtung und/oder Imprägnierung nach Anspruch 1, dadurch gekennzeichnet, daß die Beschichtungs- und/oder Imprägnierungsmasse im wesentlichen wasserfrei ist und die Komponente (1) ein Ketimin enthaltendes Amidierungsprodukt eines Vinyladditionscopolymeren, das Einheiten wenigstens eines $C_1$—$C_4$-Alkylacrylats und/oder -methacrylats enthält, mit einem aliphatischen Polyamin mit wenigstens zwei primären Amingruppen ist, wobei im wesentlichen alle primären Amingruppen in dem Amidierungsprodukt in Ketimingruppen durch Umsetzung mit einem aliphatischen oder alicyclischen $C_3$—$C_{10}$-Keton unter Entfernung von Wasser, das durch die Reaktion freigesetzt worden ist, umgewandelt worden sind, wobei die Masse durch Wasser härtbar ist, wenn sie auf Oberflächen eines Substrats für Beschichtungszwecke, Bindezwecke oder Abdichtungszwecke aufgebracht wird, und Umgebungsbedingungen bezüglich Temperatur (20 bis 25°C) und einer relativen Feuchtigkeit von wenigstens 20% ausgesetzt wird.

20. Beschichtung und/oder Imprägnierung nach Anspruch 19, dadurch gekennzeichnet, daß das Polyamin aus Ethylendiamin besteht und das Keton aus Diisopropylketon besteht.

21. Beschichtung und/oder Imprägnierung nach Anspruch 19, dadurch gekennzeichnet, daß das Polyamin aus Ethylendiamin besteht und das Keton aus Ethylamylketon besteht.

22. Verfahren zur Herstellung einer Beschichtung und/oder einer Imprägnierung gemäß einem der vorhergehenden Ansprüche auf einem Substrat aus einer Beschichtungs- und/oder Imprägnierungsmasse, wie sie in einem der Ansprüche beschrieben ist, dadurch gekennzeichnet, daß die Masse auf das Substrat aufgebracht und unter Umgebungstemperaturbedingungen, gegebenenfalls unter Erhitzen zur Beschleunigung der Härtung, gehärtet wird.

23. Verfahren nach Anspruch 22, dadurch gekennzeichnet, daß die Masse aus einem Zweipakkungssystem gebildet wird, wobei eine Packung die Komponente (1) und die andere Packung die Komponente (2) und einen Polymerisationsinhibitor enthält, wobei das Verfahren die zusätzliche Stufe des Vermischens der zwei Packungen vor der Aufbringung auf das Substrat umfaßt.

24. Verfahren nach Anspruch 23, dadurch gekennzeichnet, daß die Komponente (4) in einer oder beiden Packungen vorliegt, wobei die Packung, die die Komponente (1) enthält, gegebenenfalls außerdem einen Polymerisationsinhibitor enthält, wenn die Packung eine Verbindung der Komponente (4) enthält.

**Revendications**

1. Enduit et/ou imprégnation sous forme d'un film protecteur et/ou décoratif, liant pour des nappes fibreuses formant un tissu non tissé lié, ou adhésif, caractérisé en ce que cet enduit et/ou cette imprégnation est formé à partir d'une composition d'enduction et/ou d'imprégnation comprenant:

(1) au moins un polymère d'addition vinylique contenant un grand nombre de groupes amine primaires ou secondaires ou groupes aldimine ou cétimine attachés à des unités dans la chaîne polymère;

(2) au moins une matière contenant au moins deux groupes acryloxy ou méthacryloxy représentés par la formule:

$$H_2C = C(R)C(O)—O—$$

dans laquelle R est un atome d'hydrogène ou le radical $CH_3$;

(3) éventuellement, au moins un aldéhyde ou une cétone volatile comme stabilisant, contenant de 3 à 10 atomes de carbone; et

(4) éventuellement, au moins un composé insaturé monoéthyléniquement représenté par la formule:

$$H_2C = C(R)X$$

dans laquelle R est un atome d'hydrogène ou le radical $CH_3$ et X est un groupe acceptant l'électron.

2. Enduit et/ou imprégnation selon la revendication 1, caractérisé en ce que le polymère (1) contient des unités de monomère ayant au moins une des formules suivantes:

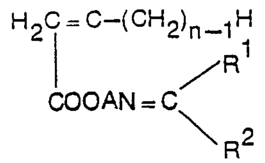

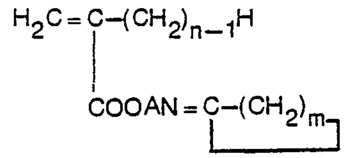

et

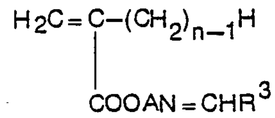

dans lesquelles:

m est un nombre entier ayant une valeur de 4 à 5,

n est égal à 1 ou 2,

A est un groupe alcoylène de $C_2$ à $C_{12}$,

$R^1$ est un groupe alcoyle de $C_1$ à $C_{12}$ ou un groupe cycloalcoyle,

$R^2$ est un groupe alcoyle de $C_1$ à $C_{12}$ ou un groupe cycloalcoyle, et

$R^3$ est un groupe phényle, halophényle ou alcoxyphényle dans lequel le groupe alcoxy comprend 1 à 4 atomes de carbone, et

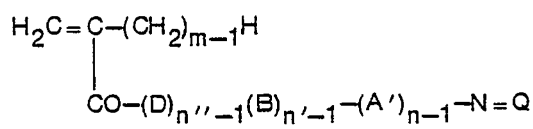

dans laquelle:

Q est choisi dans le groupe formé par:

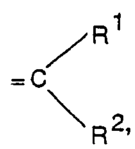

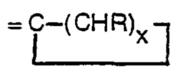 et $=CHR_3$

R est un atome d'hydrogène ou il peut être un radical méthyle dans une unité CHR,

$R^1$ est un groupe alcoyle de $C_1$ à $C_{12}$ ou un groupe cyclohexyl,

$R^2$ est un groupe alcoyle de $C_1$ à $C_{12}$ ou un groupe cyclohexyle,

$R^3$ est un groupe phényle, halophényle, alcoyle de $C_1$ à $C_{12}$, cyclohexyle ou alcoxy(de $C_1$ à $C_4$)phényle,

A', B et D sont des groupes oxyalcoylène identiques ou différents représentés par la formule:

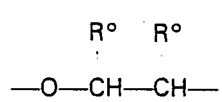

les radicaux R° sont identiques ou différents et sont un atome d'hydrogène ou un radical alcoyle ayant 1 à 2 atomes de carbone,

m est égal à 1 ou 2,

x est un nombre entier ayant une valeur de 4 à 5,

n est un nombre entier ayant une valeur de 1 à 200,

n' est un nombre entier ayant une valeur de 1 à 200, et

n'' est un nombre entier ayant une valeur de 2 à 200, la somme de n-1, n'-1 et n''-1 ayant une valeur de 2 à 200.

3. Enduit et/ou imprégnation selon la revendication 1, caractérisé en ce que le polymère (1) est préparé par la réaction d'un polymère contenant un grand nombre de groupes amine primaires ou secondaires avec une cétone ou un aldéhyde volatil contenant de 3 à 10 atomes de carbone.

4. Enduit et/ou imprégnation selon la revendication 1 ou 3, caractérisé en ce que le polymère contenant les groupes amine est préparé par l'aminolyse d'un polymère contenant des unités d'au moins un acrylate et/ou méthacrylate d'alcoyle de $C_1$ à $C_4$, avec au moins une polyamine contenant au moins deux groupes amino choisis parmi des groupes amino primaires et secondaires et ayant leurs atomes d'azote fixés à des atomes de carbone aliphatiques.

5. Enduit et/ou imprégnation selon la revendication 4, caractérisé en ce que la polyamine est représentée par la formule:

$$H_2N—R°—(NHR°)_n—NH_2$$

dans laquelle R° est un groupe alcoylène contenant 2 ou 3 atomes de carbone et n est égal à 0, 1, 2 ou 3.

6. Enduit et/ou imprégnation selon la revendication 5, caractérisé en ce que la polyamine est la 1,3-propylènediamine.

7. Enduit et/ou imprégnation selon la revendication 4, caractérisé en ce que la polyamine est l'éthylènediamine et que le polymère d'amine contient des unités représentées par la formula:

$$—\!\!(H_2C—CR)\!\!—$$

$$O{=}C—NHCH_2CH_2NH_2$$

dans laquelle R est un atome d'hydrogène ou le radical $CH_3$.

8. Enduit et/ou imprégnation selon l'une quelconque des revendications 1 à 7, caractérisé en ce que le polymère (1) présente un poids moléculaire moyen en nombre de 600 à 5000.

9. Enduit et/ou imprégnation selon l'une quelconque des revendications 1 à 8, caractérisé en ce que le composant (2) comprend au moins un composé parmi: le diacrylate d'éthylèneglycol, le diacrylate de diéthylèneglycol, le diacrylate de propylèneglycol, le diacrylate de triméthylèneglycol, le diacrylate de néopentylglycol, le diacrylate de 1,3-butylèneglycol, le diacrylate de 1,4-butylèneglycol, le diacrylate de 1,6-hexaméthylèneglycol, le diacrylate de 1,10-décaméthylèneglycol, le triacrylate de triméthylolpropane, le tétraacrylate de pentaérythritol, et le triacrylate de pentaérythritol.

10. Enduit et/ou imprégnation selon l'une quelconque des revendications 1 à 8, caractérisé en ce que le composant (2) comprend au moins un composé parmi:

(a) un ester simple obtenu par la relation d'un polyol ayant au moins deux groupes hydroxyle avec l'acide acrylique ou l'acide méthacrylique, de préference le triacrylate de triméthylolpropane ou un diméthacrylate de poly(200)éthylèneglycol;

(b) un acrylate et/ou méthacrylate d'uréthanne obtenu par la réaction d'au moins deux groupes isocyanate d'un polyisocyanate avec un acrylate et/ou méthacrylate d'hydroxyalcoyle;

(c) un polyester ayant au moins deux groupes acrylate et/ou méthacrylate obtenus par estérification des groupes hydroxy avec l'acide acrylique et/ou méthacrylique;

(d) un acrylate et/ou méthacrylate polyfonctionnel obtenu par la réaction d'un acrylate et/ou d'un méthacrylate d'hydroxyalcoyle avec (i) un acide dicarboxylique ayant de 4 à 15 atomes de carbone, (ii) un polyépoxyde ayant des groupes terminaux glycidyle, ou (iii) un polyisocyanate ayant des groupes isocyanate réactifs terminaux;

(e) un polyester à terminaison acrylate et/ou méthacrylate obtenu à partir d'acide acrylique et/ou d'acide méthacrylique, d'un polyol ayant au moins trois groupes hydroxyle, et d'un acide dicarboxylique;

(f) un acrylate et/ou un méthacrylate polyfonctionnel obtenu par la réaction d'acide acrylique et/ou méthacrylique avec au moins deux groupes époxy d'une huile siccative époxydée, ou d'un ester d'acide gras d'huile siccative époxydée,

ou un amide de celui-ci, ou un alcool correspondant, contenant au moins deux groupes époxy;

(g) un dérivé d'uréthanne ou un dérivé amine d'un acrylate et/ou d'un méthacrylate polyfonctionnel selon le point (f) ci-dessus, obtenu par la réaction d'un isocyanate ou d'une amine respectivement avec l'acrylate et/ou le méthacrylate polyfonctionnel tout en conservant au moins deux groupes acrylate et/ou méthacrylate dans celui-ci;

(h) un adduct d'acide acrylique sur une huile végétale ou animale époxydée contenant dix atomes de carbone ou plus dans le composant acide gras et suffisamment d'insaturation pour fournir au moins deux groupes époxy dans l'huile époxydée, l'huile étant de préférence ici une huile de soja ou une huile de lin;

(i) un polyacrylate et/ou un méthacrylate obtenu par la réaction d'acide acrylique et/ou d'acide méthacrylique par addition sur les groupes époxy d'une résine époxy aromatique à base de bisphénol; de préférence, un ester diacrylique d'une résine époxy liquide de bisphénol A;

(j) un polyacrylate et/ou un méthacrylate obtenu par l'addition d'acide acrylique ou d'acide méthacrylique sur un polymère vinylique liquide ayant des groupes glycidyle pendants résultat d'une

polymérisation par addition d'un mélange monomère comprenant de l'acrylate et/ou du méthacrylate de glycidyle, de l'éther vinylique de glycidyle ou le sulfure vinylique de glycidyle;

(k) un acrylate et/ou un méthacrylate polyfonctionnel dérivé d'un anhydride d'acide acrylique ou d'un anhydride d'acide méthacrylique et d'un polyépoxyde;

(l) un acrylate et/ou un méthacrylate d'uréthanne ester polyfonctionnel obtenu par la combinaison d'un acrylate et/ou d'un méthacrylate d'hydroxyalcoyle, d'un diisocyanate, et d'un condensat alkyde à fonction hydroxy;

(m) un polyester à terminaison acrylate et/ou méthacrylate obtenu par la réaction d'un polycaprolactone diol ou triol avec un diisocyanate, et un acrylate et/ou méthacrylate d'hydroxyalcoyle, et un uréthanne polyacrylate et/ou méthacrylate obtenu par la réaction d'un ester contenant le groupe hydroxyle d'un polyol avec l'acide acrylique et/ou méthacrylique et un polyisocyanate.

11. Enduit et/ou imprégnation selon l'une quelconque des revendications 1 à 10, caractérisé en ce que la quantité relative de composant (2) au composant (1) dans la composition, en fonction respectivement de l'équivalence d'insaturation acryloxy et méthacryloxy de (2) et de l'équivalence d'azote d'amine primaire et secondaire de (1), est telle qu'elle fournit de 0,5 à 3,5 équivalents de (2) pour chaque équivalent de (1).

12. Enduit et/ou imprégnation selon l'une quelconque des revendications précédentes, caractérisé en ce que le composant (3) comprend l'éthylamyl cétone ou la diisopropyl cétone.

13. Enduit et/ou imprégnation selon l'une quelconque des revendications précédentes, caractérisé en ce que le composant (4) comprend au moins un composé représenté par la formule:

$$CH_2{=}C(R)X$$

dans laquelle R est un atome d'hydrogène ou le radical $CH_3$ et X est un groupe CN, $CONR^2R^3$ ou $COOR^4$, où $R^2$ est un atome d'hydrogène ou un radical alcoyle de $C_1$ à $C_{20}$, $R^3$ est un atome d'hydrogène ou un radical alcoyle de $C_1$ à $C_{20}$ et $R^4$ est un groupe alcoyle de $C_1$ à $C_{20}$ qui peuvent être substitués par des atomes d'hydrogène.

14. Enduit et/ou imprégnation selon la revendication 1, caractérisé en ce que le composant (1) est un polymère d'addition vinylique contenant des groupes amine dont au moins une partie de ceux-ci est au moins partiellement bloquée par la réaction avec de l'acrylate d'isobornyle, la quantité d'acrylate d'isobornyle étant suffisante pour réduire la quantité d'atomes d'hydrogène actifs sur les groupes amine primaires ou secondaires du polymère contenant l'amine mais pas suffisante pour éliminer suffisamment d'atomes d'hydrogène pour empêcher l'addition convenable du composant (1) sur les doubles liaisons du composant (2), pour réticuler la composition au degré nécessaire pour fournir les propriétés mécaniques et de résistance désirées dans les produits durcis.

15. Enduit et/ou imprégnation selon la revendication 1, caractérisé en ce que le composant (4) comprend au moins un composé contenant un groupe simple acryloxy ou méthacryloxy.

16. Enduit et/ou imprégnation selon la revendication 2, caractérisé en ce que le composant (1) est un copolymère de méthacrylate de diisopropylcétiminoéthyle.

17. Enduit et/ou imprégnation selon la revendication 16, caractérisé en ce que le composant (2) est un ester diacrylique d'une résine époxy liquide.

18. Enduit et/ou imprégnation selon la revendication 16, caractérisé en ce que le composant (2) est un copolymère acrylé de méthacrylate de glycidyle/styrène ayant au moins deux groupes acryloxy insaturés.

19. Enduit et/ou imprégnation selon la revendication 1, caractérisé en ce que la composition d'enduction et/ou d'imprégnation est pratiquement anhydre et que le composant (1) est un produit d'amidation contenant le groupe cétimine d'un copolymère d'addition vinylique contenant des unités d'au moins un acrylate et/ou méthacrylate d'alcoyle de $C_1$ à $C_4$ avec une polyamine aliphatique ayant au moins deux groupes amine primaires, pratiquement tous les groupes amine primaires dans le produit d'amidation ayant été convertis en groupes cétimine par la réaction avec une cétone aliphatique ou alicyclique de $C_3$ à $C_{10}$ avec élimination de l'eau libérée par cette réaction, si bien que la composition est hydrodurcissable lorsqu'elle est appliquée sur les surfaces d'un substrat pour l'enduction, le collage ou le fixage de celle-ci dans des conditions ambiantes de température (20—25°C) et une humidité relative d'au moins 20%.

20. Enduit et/ou imprégnation selon la revendication 19, caractérisé en ce que la polyamine est l'éthylènediamine et la cétone est la diisopropyl cétone.

21. Enduit et/ou imprégnation selon la revendication 19, caractérisé en ce que la polyamine est l'éthylènediamine et la cétone est l'éthylamyl cétone.

22. Procédé pour former sur un substrat un enduit et/ou une imprégnation selon l'une quelconque des revendications précédentes à partir de la composition d'enduction et/ou d'imprégnation telle que décrite dans l'une quelconque desdites revendications, caractérisé en ce que la composition est appliquée sur le substrat et durcie dans des conditions de température ambiante, éventuellement avec chauffage pour accélérer le durcissement.

23. Procédé selon la revendication 22, caractérisé en ce que la composition est mise sous forme d'un système à deux conditionnements, un conditionnement contenant le composant (1), l'autre conditionnement contenant le composant (2) et un inhibiteur de polymérisation, le procédé comprenant l'étape supplémentaire de mélange des deux conditionnements avant application sur le substrat.

24. Procédé selon la revendication 23, caractérisé en ce que le composant (4) est présent dans un conditionnement ou dans les deux, le conditionnement contenant le composant (1) comprenant éventuellement de plus un inhibiteur de polymérisation lorsque ce conditionnement contient un composé du composant (4).